# EUROPEAN PATENT SPECIFICATION

(11) **EP 3 307 001 B1**
(45) Date of publication and mention of the grant of the patent: **21.07.2021**
(21) Application number: 16806558.9
(22) Date of filing: 23.03.2016
(51) Int. Cl.: H04W 72/04, H04L 5/00

(54) **INTER-CARRIER FREQUENCY COOPERATION METHOD AND DEVICE**
VERFAHREN ZUR FREQUENZKOOPERATION ZWISCHEN TRÄGERN UND VORRICHTUNG
PROCÉDÉ ET DISPOSITIF DE COOPÉRATION DE FRÉQUENCES ENTRE PORTEUSES

(30) Priority: 08.06.2015 CN 201510308889
(43) Date of publication of application: 11.04.2018
(73) Proprietor: ZTE Corporation, Shenzhen, Guangdong 518057 (CN)
(72) Inventor: LU, Zhaohua, Shenzhen Guangdong 518057 (CN); CHEN, Yijian, Shenzhen Guangdong 518057 (CN); XIAO, Huahua, Shenzhen Guangdong 518057 (CN); CHEN, Xianming, Shenzhen Guangdong 518057 (CN); ZHAO, Jing, Shenzhen Guangdong 518057 (CN); WANG, Yuxin, Shenzhen Guangdong 518057 (CN); DAI, Bo, Shenzhen Guangdong 518057 (CN)
(74) Representative: Canzler & Bergmeier Patentanwälte Partnerschaft mbB
(86) International application number: PCT/CN2016/077127
(87) International publication number: WO 2016/197660

(56) References cited:
- EP-A1- 2 068 580
- EP-A2- 2 117 260
- WO-A2-2009/130569
- CN-A- 101 132 215
- CN-A- 102 036 314

## Description

### TECHNICAL FIELD

The disclosure relates to, but not limited to communications.

### BACKGROUND

Emergence of an intelligent terminal such as an intelligent mobile phone and a tablet computer brings vigorous development of data application services in wireless communication network, for example, cloud computing, the Internet of things, the mobile Internet, video calls made with mobile phones, video conferences held with mobile phones, online games, online videos, online music, picture downloading, the microblog and communities. It also drives significant increase of wireless communication network users to further make wireless data services explosively increased. Prediction of an authority shows that wireless data services will be increased by 500 to 1000 times in the next 10 years with a 1.6 to 2 times increase per year on average.

There are many methods for improving a wireless network capacity, and the common ones include: (1) increasing a spectrum bandwidth; (2) enhancing traffic offloading; (3) increasing a network density; and (4) improving spectrum efficiency.

The manner of increasing the spectrum bandwidth is the most direct method for improving the wireless network capacity. A spectrum resource range used by a conventional wireless communication system is mainly concentrated on a low frequency band (for example, below 6GHz), and has the characteristics of few available spectrum resources, large coverage, high electromagnetic wave diffraction capability and the like. In design, improvement of the spectrum efficiency is required to be preferably considered. In order to meet a future development requirement, it is an inevitable trend to develop and utilize a high frequency band (for example, above 6GHz) in a 5th-generation mobile communication system. The high frequency band has the characteristics of many available spectrum resources, fast transmission energy attenuation, poor electromagnetic wave diffraction capability and the like, and its design concept should preferably consider a coverage capability rather than the spectrum efficiency.

Currently, carrier frequency cooperation is mainly concentrated on the low frequency band. Because characteristics of carrier frequencies are relatively consistent, a manner adopted for a 4th-generation mobile communication system is also very simple.

The document EP2117260A2 discloses a method and base station for providing a multicast and/or broadcast service (MBS) in a communication system.

The document EP2068580A1 discloses an evolved Multimedia Broadcast/Multicast Service (MBMS) base station, user equipment and method, which support an Evolved Multimedia Broadcast/Multicast Service (EMBMS) dedicated carrier.

### SUMMARY

The below is a summary about a theme described in the disclosure in detail. The summary is not intended to limit the scope of protection of the claims.

Considering that it is an inevitable trend to use a high frequency band in a future wireless communication system, aggregation of a high frequency band and a high frequency band or aggregation of a low frequency band and a high frequency band will inevitably appear in carrier frequency cooperation. Researches about this aspect are still few at present, and deep-going researches are required.

The disclosure provides an inter-carrier-frequency cooperation solution, so as to fully develop a system capacity improvement capability by use of a high frequency band in a 5th-generation mobile communication system and improve quality of service of the whole mobile communication system. The object of the invention is achieved by the subject-matter of the independent claims. The dependent claims describe advantageous embodiments.

An inter-carrier frequency cooperation method is provided. The method includes: determining description information of a second carrier frequency; and sending, by a first communication node, the description information of the second carrier frequency to a second communication node via a first carrier frequency, and the description information of the second carrier frequency at least including control channel information of the second carrier frequency; where the control channel information of the second carrier frequency includes one of: a sending period of a control channel, where when a frequency band of the second carrier frequency is higher than a frequency band of the first carrier frequency, the sending period of a control channel sent on the second carrier frequency is shorter than a sending period of a control channel sent on the first carrier frequency; control information contained in the control channel, where when a frequency band of the second carrier frequency is higher than a frequency band of the first carrier frequency, the number of bits describing resource allocation information in control information contained in a control channel sent on the second carrier frequency is smaller than the number of bits describing resource allocation information in control information contained in a control channel sent on the first carrier frequency; and indication information of a resource used for sending the control channel, where when a frequency band of the second carrier frequency is higher than a frequency band of the first carrier frequency, a bandwidth occupied by a control channel sent on the second carrier frequency is larger than a bandwidth occupied by a control channel sent on the first carrier frequency.

Optionally, the description information of the second carrier frequency may further include sending beam information of the second carrier frequency, and the sending beam information of the second carrier frequency may include one of: the number of sending beams, sending beam set information and indication information of resources of sending beams.

Optionally, the description information of the second carrier frequency may further include pilot information of the second carrier frequency, and the pilot information of the second carrier frequency may include one of: a pilot type, indication information of time-frequency resources used by different types of pilots, feedback modes corresponding to different types of pilots and channel estimation parameters based on different pilot types.

Optionally, the description information of the second carrier frequency may further include data channel information of the second carrier frequency, and the data channel information of the second carrier frequency may include one of: extended sequence information used when the second communication node sends data and indication information of a carrier frequency used when the second communication node sends retransmitted data.

Optionally, the description information of the second carrier frequency may further include: a sending time t2 of Acknowledgement (ACK) or Negative Acknowledgement (NAK) information generated by the second communication node for a decoding condition of a downlink data packet sent at a time t1 on the second carrier frequency.

Optionally, the description information of the second carrier frequency may further include Hybrid Automatic Repeat Request, HARQ, timing information of the second carrier frequency, the HARQ timing information of the second carrier frequency may include a moment when the second communication node feeds back HARQ information for a physical data packet sent on the second carrier frequency. When the frequency band of the second carrier frequency is higher than the frequency band of the first carrier frequency, the moment when the second communication node feeds back the HARQ information for the physical data packet sent on the second carrier frequency may be earlier than a transmission ending moment of the physical data packet.

Optionally, the description information of the second carrier frequency may further include working time information of the second communication node on the second carrier frequency, and the working time information of the second communication node on the second carrier frequency may refer to a time period when the second communication node receives the control channel on the second carrier frequency.

An inter-carrier-frequency cooperation method is provided. The method includes: receiving, by a second communication node, description information of a second carrier frequency, sent by a first communication node via a first carrier frequency, and the description information of the second carrier frequency at least including control channel information of the second carrier frequency; and performing, by the second communication node, an operation according to the description information of the second carrier frequency; where the control channel information of the second carrier frequency includes one of: a sending period of a control channel, where when a frequency band of the second carrier frequency is higher than a frequency band of the first carrier frequency, the sending period of a control channel sent on the second carrier frequency is shorter than a sending period of a control channel sent on the first carrier frequency; control information contained in the control channel, where when a frequency band of the second carrier frequency is higher than a frequency band of the first carrier frequency, the number of bits describing resource allocation information in control information contained in a control channel sent on the second carrier frequency is smaller than the number of bits describing resource allocation information in control information contained in a control channel sent on the first carrier frequency; and indication information of a resource used for sending the control channel, where when a frequency band of the second carrier frequency is higher than a frequency band of the first carrier frequency, a bandwidth occupied by a control channel sent on the second carrier frequency is larger than a bandwidth occupied by a control channel sent on the first carrier frequency.

Optionally, the description information of the second carrier frequency may further include sending beam information of the second carrier frequency, the sending beam information of the second carrier frequency may include one of: the number of sending beams, sending beam set information and indication information of resources of sending beams.

Optionally, the sending beams may include a first sending beam set and a second sending beam set.

Optionally, the description information of the second carrier frequency may further include pilot information of the second carrier frequency, the pilot information of the second carrier frequency may include one of: a pilot type, indication information of time-frequency resources used by different types of pilots, feedback modes corresponding to different types of pilots and channel estimation parameters based on different pilot types.

Optionally, the pilot type may include a first pilot type and a second pilot type. The step that the second communication node performs the operation according to the description information of the second carrier frequency may include that the second communication node determines that the number of ports corresponding to the first pilot type is larger than the number of ports corresponding to the second pilot type according to the description information of the second carrier frequency.

Optionally, the step that the second communication node performs the operation according to the description information of the second carrier frequency may include that the second communication node receives the control channel sent on the second carrier frequency according to the description information of the second carrier frequency.

Optionally, the description information of the second carrier frequency may further include data channel information of the second carrier frequency, the data channel information of the second carrier frequency may include one of: extended sequence information used when the second communication node sends data and indication information of a carrier frequency used when the second communication node sends retransmitted data.

Optionally, the extended sequence information used when the second communication node sends the data may include one of: a generation manner for a spread spectrum sequence, a mapping relationship between the spread spectrum sequence and a sending resource and a selection method for the spread spectrum sequence. The step that the second communication node performs the operation according to the description information of the second carrier frequency may include that the second communication node sends the data on the second carrier frequency according to the extended sequence information in the description information of the second carrier frequency.

Optionally, the description information of the second carrier frequency may further include Hybrid Automatic Repeat Request, HARQ, timing information of the second carrier frequency, the HARQ timing information of the second carrier frequency may include a moment when the second communication node feeds back HARQ information for a physical data packet sent on the second carrier frequency. When the frequency band of the second carrier frequency is higher than the frequency band of the first carrier frequency, the moment when the second communication node feeds back the HARQ information for the physical data packet sent on the second carrier frequency may be earlier than a transmission ending moment of the physical data packet. The step that the second communication node performs the operation according to the description information of the second carrier frequency may include that the second communication node feeds back the HARQ information for the physical data packet sent on the second carrier frequency at the corresponding moment according to the description information of the second carrier frequency.

Optionally, the description information of the second carrier frequency may further include working time information of the second communication node on the second carrier frequency, the working time information of the second communication node on the second carrier frequency may refer to a time period when the second communication node receives the control channel on the second carrier frequency. The step that the second communication node performs the operation according to the description information of the second carrier frequency may include that the second communication node receives the control channel on the second carrier frequency within the corresponding time period according to the description information of the second carrier frequency.

An inter-carrier frequency cooperation device is provided including: a determination module, configured to determine description information of a second carrier frequency; and a sending module, configured to send the description information of the second carrier frequency to a second communication node via a first carrier frequency, and the description information of the second carrier frequency at least including control channel information of the second carrier frequency; where the control channel information of the second carrier frequency includes one of: a sending period of a control channel, where when a frequency band of the second carrier frequency is higher than a frequency band of the first carrier frequency, the sending period of a control channel sent on the second carrier frequency is shorter than a sending period of a control channel sent on the first carrier frequency; control information contained in the control channel, where when a frequency band of the second carrier frequency is higher than a frequency band of the first carrier frequency, the number of bits describing resource allocation information in control information contained in a control channel sent on the second carrier frequency is smaller than the number of bits describing resource allocation information in control information contained in a control channel sent on the first carrier frequency; and indication information of a resource used for sending the control channel, where when a frequency band of the second carrier frequency is higher than a frequency band of the first carrier frequency, a bandwidth occupied by a control channel sent on the second carrier frequency is larger than a bandwidth occupied by a control channel sent on the first carrier frequency.

An inter-carrier-frequency cooperation device is provided, which is arranged in a second communication node and includes a receiving module, configured to receive description information of a second carrier frequency, sent by a first communication node via a first carrier frequency, and the description information of the second carrier frequency at least including control channel information of the second carrier frequency; and an operation module, configured to perform an operation according to the description information of the second carrier frequency; where the control channel information of the second carrier frequency includes one of: a sending period of a control channel, where when a frequency band of the second carrier frequency is higher than a frequency band of the first carrier frequency, the sending period of a control channel sent on the second carrier frequency is shorter than a sending period of a control channel sent on the first carrier frequency; control information contained in the control channel, where when a frequency band of the second carrier frequency is higher than a frequency band of the first carrier frequency, the number of bits describing resource allocation information in control information contained in a control channel sent on the second carrier frequency is smaller than the number of bits describing resource allocation information in control information contained in a control channel sent on the first carrier frequency; and indication information of a resource used for sending the control channel, where when a frequency band of the second carrier frequency is higher than a frequency band of the first carrier frequency, a bandwidth occupied by a control channel sent on the second carrier frequency is larger than a bandwidth occupied by a control channel sent on the first carrier frequency.

Embodiments of the disclosure disclose the inter-carrier frequency cooperation solution so as to fully develop a system capacity improvement capability by use of a high frequency band in a 5th-generation mobile communication system and improve quality of service of the whole mobile communication system.

After the drawings and detailed descriptions are read and understood, the other aspects may be comprehended.

### BRIEF DESCRIPTION OF DRAWINGS

FIG. 1 is a schematic diagram of a first inter-carrier frequency cooperation method according to an embodiment of the disclosure.
FIG. 2 is a schematic diagram of a second inter-carrier frequency cooperation method according to an embodiment of the disclosure.
FIG. 3 is a schematic diagram of a first inter-carrier frequency cooperation device according to an embodiment of the disclosure.
FIG. 4 is a schematic diagram of a second inter-carrier frequency cooperation device according to an embodiment of the disclosure.
FIG. 5 is a schematic diagram of embodiments of the disclosure.

### DETAILED DESCRIPTION

Implementation modes of the disclosure will be described below in combination with the drawings and the embodiments.

It is noted that the embodiments in the disclosure and characteristics in the embodiments may be combined without conflicts. In addition, although logical sequences are shown in flowcharts, shown or described steps may be executed in an order different from those described herein under some circumstances.

The disclosure relates to specific embodiments, while other references to embodiment should be understood as examples.

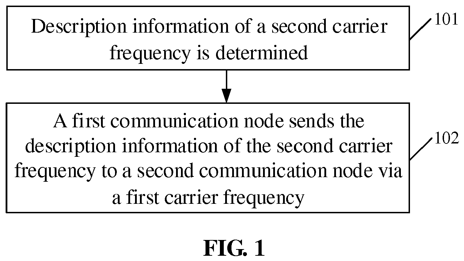

An inter-carrier frequency cooperation method, as shown in FIG. 1, includes the following steps.

In Step 101, description information of a second carrier frequency is determined.

In Step 102, a first communication node sends the description information of the second carrier frequency to a second communication node via a first carrier frequency. The description information of the second carrier frequency includes one of: sending beam information of the second carrier frequency, pilot information of the second carrier frequency, control channel information of the second carrier frequency, data channel information of the second carrier frequency, HARQ timing information of the second carrier frequency and working time information of the second communication node on the second carrier frequency.

Herein, it may be, but not limited to, the first communication node determining the description information of the second carrier frequency. It may also be another node determining the description information of the second carrier frequency, and the first communication node receives or actively acquires the description information of the second carrier frequency for sending to the second communication node.

Herein, the first communication node may be, but not limited to, a base station, and the second communication node may be, but not limited to, a terminal.

Optionally, the sending beam information of the second carrier frequency includes at least one of: the number of sending beams, sending beam set information and indication information of resources of sending beams.

Optionally, the number of sending beams is smaller than a total number of sending beams on the second carrier frequency.

Herein, the step that the description information of the second carrier frequency is determined may include that:
the number N of directions of sending beams which may be successfully received by the second communication node on the second carrier frequency is judged via channel state information of the second communication node on the first carrier frequency, and N is determined as the number of sending beams.

Optionally, the sending beams at least include a first sending beam set and a second sending beam set.

Herein, a sending period of the sending beams in the first sending beam set may be longer than a sending period of the sending beams in the second sending beam set.

Herein, a direction of at least one sending beam in the first sending beam set includes directions of X sending beams in the second sending beam set, X being larger than 1.

The sending beam set information may include: a relationship between the at least one sending beam in the first sending beam set and the X sending beams in the second sending beam set.

The second communication node preferentially receives the sending beams in the first sending beam set.

Optionally, the pilot information of the second carrier frequency includes at least one of: a pilot type, indication information of time-frequency resources used by different types of pilots, feedback modes corresponding to different types of pilots and channel estimation parameters based on different pilot types.

Optionally, the pilot type at least includes a first pilot type and a second pilot type, and the number of ports corresponding to the first pilot type is larger than the number of ports corresponding to the second pilot type.

The second communication node preferentially receives the sending beams in the first sending beam set.

Optionally, different codebook sets are used in the feedback modes for different pilot types.

Optionally, the channel estimation parameters at least include parameters related to a channel estimation algorithm used by the second communication node. Different pilot types may correspond to different channel estimation algorithms.

Optionally, the control channel information of the second carrier frequency includes at least one of: a sending period of a control channel, control information contained in the control channel and indication information of a resource used for sending the control channel.

Optionally, when a frequency band of the second carrier frequency is higher than a frequency band of the first carrier frequency, the sending period of the control channel sent on the second carrier frequency is shorter than a sending period of a control channel sent on the first carrier frequency.

Optionally, when the frequency band of the second carrier frequency is higher than the frequency band of the first carrier frequency, the number of bits describing resource allocation information in the control information contained in the control channel sent on the second carrier frequency is smaller than the number of bits describing resource allocation information in control information contained in the control channel sent on the first carrier frequency.

Optionally, when the frequency band of the second carrier frequency is higher than the frequency band of the first carrier frequency, a bandwidth occupied by the control channel sent on the second carrier frequency is larger than a bandwidth occupied by the control channel sent on the first carrier frequency.

Optionally, there are multiple types of control channels, and sending periods of different types of control channels are different.

Optionally, the control channels are a unicast control channel.

Optionally, the data channel information of the second carrier frequency includes at least one of: extended sequence information used when the second communication node sends data and indication information of a carrier frequency used when the second communication node sends retransmitted data.

Optionally, the extended sequence information used when the second communication node sends the data includes at least one of: a generation manner for a spread spectrum sequence, a mapping relationship between the spread spectrum sequence and a sending resource and a selection method for the spread spectrum sequence.

Optionally, the carrier frequency used when the second communication node sends the retransmitted data is different from the first carrier frequency and the second carrier frequency.

Optionally, the description information of the second carrier frequency further includes:
a sending time t2 of ACK or NAK information generated by the second communication node for a decoding condition of a downlink data packet sent at a time t1 on the second carrier frequency.

Herein, a difference value t2-t1 between the sending time t2 of the ACK or NAK information and the time t1 of sending the downlink data packet is smaller than a difference value between a sending time of ACK or NAK information corresponding to a downlink data packet sent on the first carrier frequency and a time of sending the downlink data packet.

Optionally, the HARQ timing information of the second carrier frequency includes a moment when the second communication node feeds back HARQ information for a physical data packet sent on the second carrier frequency. When the frequency band of the second carrier frequency is higher than the frequency band of the first carrier frequency, the moment when the second communication node feeds back the HARQ information for the physical data packet sent on the second carrier frequency is earlier than a transmission ending moment of the physical data packet.

Optionally, a length of the physical data packet sent on the second carrier frequency is larger than a maximum physical data packet length allowed to be sent on the first carrier frequency.

Optionally, the working time information of the second communication node on the second carrier frequency refers to a time period when the second communication node receives the control channel on the second carrier frequency.

An embodiment of the disclosure further provides a computer-readable storage medium, which stores computer-executable instructions, the computer-executable instructions being configured to execute the inter-carrier frequency cooperation method.

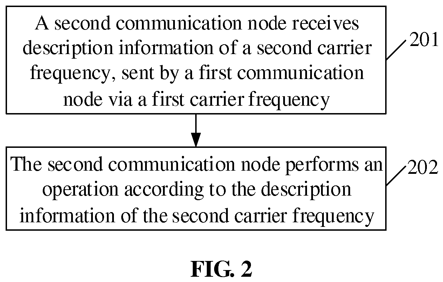

An inter-carrier-frequency cooperation method is applied to a second communication node, and as shown in FIG. 2, includes the following steps.

In Step 201, the second communication node receives description information of a second carrier frequency, sent by a first communication node via a first carrier frequency. The description information of the second carrier frequency includes one of: sending beam information of the second carrier frequency, pilot information of the second carrier frequency, control channel information of the second carrier frequency, data channel information of the second carrier frequency, HARQ timing information of the second carrier frequency and working time information of the second communication node on the second carrier frequency.

In Step 202, the second communication node performs an operation according to the description information of the second carrier frequency.

Optionally, the sending beam information of the second carrier frequency includes at least one of: the number of sending beams, sending beam set information and indication information of resources of sending beams.

Optionally, the number of sending beams N is smaller than a total number of sending beams on the second carrier frequency.

Herein, the step that the second communication node performs the operation according to the description information of the second carrier frequency may include that: the second communication node receives N beams on a second carrier according to the number of sending beams N in the description information of the second carrier frequency.

Optionally, the sending beams at least include a first sending beam set and a second sending beam set.

Herein, a sending period of the sending beams in the first sending beam set may be longer than a sending period of the sending beams in the second sending beam set.

The step that the second communication node performs the operation according to the description information of the second carrier frequency may include that: the second communication node selects the sending beam set to be received according to the sending beam set information in the description information of the second carrier frequency.

Herein, a direction of at least one sending beam in the first sending beam set includes directions of X sending beams in the second sending beam set, X being larger than 1.

The sending beam set information may include: a relationship between the at least one sending beam in the first sending beam set and the X sending beams in the second sending beam set.

Herein, the step that the second communication node performs the operation according to the description information of the second carrier frequency may include that: when the second communication node works on the second carrier frequency, the sending beams in the first sending beam set are received at first, one or more sending beams with highest signal receiving quality are selected, and sending beams to be received in the second sending beam set are determined based on the relationship between the selected sending beams and the sending beams in the second sending beam set in the description information of the second carrier frequency.

Optionally, the pilot information of the second carrier frequency includes at least one of: a pilot type, indication information of time-frequency resources used by different types of pilots, feedback modes corresponding to different types of pilots and channel estimation parameters based on different pilot types.

Optionally, the pilot type at least includes a first pilot type and a second pilot type.

The step that the second communication node performs the operation according to the description information of the second carrier frequency includes that: the second communication node determines that the number of ports corresponding to the first pilot type is larger than the number of ports corresponding to the second pilot type according to the description information of the second carrier frequency.

Herein, the step that the second communication node performs the operation according to the description information of the second carrier frequency may further include that:
when the second communication node works on the second carrier frequency, global channel information is obtained via the first pilot type, and the second pilot type to be received is further determined.

Optionally, different codebook sets are used in the feedback modes for different pilot types.

The step that the second communication node performs the operation according to the description information of the second carrier frequency includes that: when the second communication node works on the second carrier frequency, codebook information is determined according to a channel condition based on the first pilot type and/or based on the second pilot type, and the codebook information is fed back to the first communication node.

Optionally, the channel estimation parameters at least include parameters related to a channel estimation algorithm used by the second communication node. Different pilot types may correspond to different channel estimation algorithms.

The step that the second communication node performs the operation according to the description information of the second carrier frequency includes that: when the second communication node works on the second carrier frequency, the corresponding channel estimation algorithm is used according to the description information of the second carrier frequency.

Optionally, the control channel information of the second carrier frequency includes at least one of: a sending period of a control channel, control information contained in the control channel and indication information of a resource used for sending the control channel.

The step that the second communication node performs the operation according to the description information of the second carrier frequency includes that: the second communication node receives the control channel on the second carrier frequency according to the description information of the second carrier frequency.

Optionally, when a frequency band of the second carrier frequency is higher than a frequency band of the first carrier frequency, the sending period of the control channel sent on the second carrier frequency is shorter than a sending period of a control channel sent on the first carrier frequency.

Optionally, when the frequency band of the second carrier frequency is higher than the frequency band of the first carrier frequency, the number of bits describing resource allocation information in the control information contained in the control channel sent on the second carrier frequency is smaller than the number of bits describing resource allocation information in control information contained in the control channel sent on the first carrier frequency.

Optionally, when the frequency band of the second carrier frequency is higher than the frequency band of the first carrier frequency, a bandwidth occupied by the control channel sent on the second carrier frequency is larger than a bandwidth occupied by the control channel sent on the first carrier frequency.

Optionally, there are multiple types of control channels, and sending periods of different types of control channels are different.

Optionally, the control channels are a unicast control channel.

Optionally, the data channel information of the second carrier frequency includes at least one of: extended sequence information used when the second communication node sends data and indication information of a carrier frequency used when the second communication node sends retransmitted data.

Optionally, the extended sequence information used when the second communication node sends the data includes at least one of:
a generation manner for a spread spectrum sequence, a mapping relationship between the spread spectrum sequence and a sending resource and a selection method for the spread spectrum sequence.

The step that the second communication node performs the operation according to the description information of the second carrier frequency includes that: the second communication node sends the data on the second carrier frequency according to the extended sequence information in the description information of the second carrier frequency.

Optionally, the carrier frequency used when the second communication node sends the retransmitted data is different from the first carrier frequency and the second carrier frequency.

Optionally, the description information of the second carrier frequency further includes: a time t2 of sending ACK or NAK information generated by the second communication node for a decoding condition of a downlink data packet sent at a time t1 on the second carrier frequency.

Herein, a difference value t2-t1 between the time t2 of sending the ACK or NAK information and the time t1 of sending the downlink data packet is smaller than a difference value between a time of sending ACK or NAK information corresponding to a downlink data packet sent on the first carrier frequency and a time of sending the downlink data packet.

Optionally, the HARQ timing information of the second carrier frequency includes: a moment when the second communication node feeds back HARQ information for a physical data packet sent on the second carrier frequency.

When the frequency band of the second carrier frequency is higher than the frequency band of the first carrier frequency, the moment when the second communication node feeds back the HARQ information for the physical data packet sent on the second carrier frequency is earlier than a transmission ending moment of the physical data packet.

The step that the second communication node performs the operation according to the description information of the second carrier frequency includes that: the second communication node feeds back the HARQ information for the physical data packet sent on the second carrier frequency at the corresponding moment according to the description information of the second carrier frequency.

Optionally, a length of the physical data packet sent on the second carrier frequency is larger than a maximum physical data packet length allowed to be sent on the first carrier frequency.

Optionally, the working time information of the second communication node on the second carrier frequency refers to a time period when the second communication node receives the control channel on the second carrier frequency.

The step that the second communication node performs the operation according to the description information of the second carrier frequency includes that: the second communication node receives the control channel on the second carrier frequency within the corresponding time period according to the description information of the second carrier frequency.

An embodiment of the disclosure further provides a computer-readable storage medium, which stores computer-executable instructions, the computer-executable instructions being configured to execute the inter-carrier frequency cooperation method.

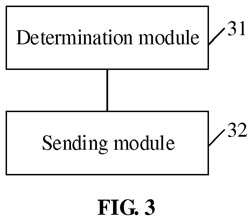

As shown in FIG. 3, an inter-carrier frequency cooperation device includes a determination module 31 and a sending module 32.

The determination module 31 is configured to determine description information of a second carrier frequency.

The sending module 32 is configured to send the description information of the second carrier frequency to a second communication node via a first carrier frequency, the description information of the second carrier frequency including one of: sending beam information of the second carrier frequency, pilot information of the second carrier frequency, control channel information of the second carrier frequency, data channel information of the second carrier frequency, HARQ timing information of the second carrier frequency and working time information of a second communication node on the second carrier frequency.

Herein, the sending module 32 is arranged in a first communication node. The determination module 31 may be arranged in, but not limited to, the first communication node, and may also be arranged in another node.

Optionally, the sending beam information of the second carrier frequency includes at least one of: the number of sending beams, sending beam set information and indication information of resources of sending beams.

Herein, the number of sending beams may be smaller than a total number of sending beams on the second carrier frequency.

Herein, the determination module 31 is configured to judge the number N of directions of sending beams which may be successfully received by the second communication node on the second carrier frequency via channel state information of the second communication node on the first carrier frequency, and take N as the number of sending beams.

Herein, the sending beams may at least include a first sending beam set and a second sending beam set.

Herein, a sending period of the sending beams in the first sending beam set may be longer than a sending period of the sending beams in the second sending beam set.

Herein, the sending beam set information may include, but not limited to: a relationship between at least one sending beam in the first sending beam set and X sending beams in the second sending beam set, X being larger than 1.

Optionally, the pilot information of the second carrier frequency includes at least one of: a pilot type, indication information of time-frequency resources used by different types of pilots, feedback modes corresponding to different types of pilots and channel estimation parameters based on different pilot types.

Herein, the pilot type may at least include a first pilot type and a second pilot type, and the number of ports corresponding to the first pilot type is larger than the number of ports corresponding to the second pilot type.

Herein, different codebook sets may be used in the feedback modes for different pilot types.

Herein, the channel estimation parameters may at least include parameters related to a channel estimation algorithm used by the second communication node.

Optionally, the control channel information of the second carrier frequency includes at least one of: a sending period of a control channel, control information contained in the control channel and indication information of a resource used for sending the control channel.

Herein, when a frequency band of the second carrier frequency is higher than a frequency band of the first carrier frequency, the sending period of the control channel sent on the second carrier frequency may be shorter than a sending period of a control channel sent on the first carrier frequency.

Herein, when the frequency band of the second carrier frequency is higher than the frequency band of the first carrier frequency, the number of bits describing resource allocation information in the control information contained in the control channel sent on the second carrier frequency may be smaller than the number of bits describing resource allocation information in control information contained in the control channel sent on the first carrier frequency.

Herein, when the frequency band of the second carrier frequency is higher than the frequency band of the first carrier frequency, a bandwidth occupied by the control channel sent on the second carrier frequency may be larger than a bandwidth occupied by the control channel sent on the first carrier frequency.

Herein, there may be multiple types of control channels, and sending periods of different types of control channels may be different.

Herein, the control channels may be, but not limited to, a unicast control channel.

Optionally, the data channel information of the second carrier frequency includes at least one of: extended sequence information used when the second communication node sends data and indication information of a carrier frequency used when the second communication node sends retransmitted data.

Herein, the extended sequence information used when the second communication node sends the data may include at least one of: a generation manner for a spread spectrum sequence, a mapping relationship between the spread spectrum sequence and a sending resource and a selection method for the spread spectrum sequence.

Herein, the carrier frequency used when the second communication node sends the retransmitted data may be different from the first carrier frequency and the second carrier frequency.

Optionally, the description information of the second carrier frequency may further include: a time t2 of sending ACK or NAK information generated by the second communication node for a decoding condition of a downlink data packet sent at a time t1 on the second carrier frequency.

Herein, a difference value t2-t1 between the time t2 of sending the ACK or NAK information and the time t1 of sending the downlink data packet may be smaller than a difference value between a time of sending ACK or NAK information corresponding to a downlink data packet sent on the first carrier frequency and a time of sending the downlink data packet.

Optionally, the HARQ timing information of the second carrier frequency includes a moment when the second communication node feeds back HARQ information for a physical data packet sent on the second carrier frequency.

When the frequency band of the second carrier frequency is higher than the frequency band of the first carrier frequency, the moment when the second communication node feeds back the HARQ information for the physical data packet sent on the second carrier frequency is earlier than a transmission ending moment of the physical data packet.

Herein, a length of the physical data packet sent on the second carrier frequency may be larger than a maximum physical data packet length allowed to be sent on the first carrier frequency.

Optionally, the working time information of the second communication node on the second carrier frequency refers to a time period when the second communication node receives the control channel on the second carrier frequency.

Other implementation details may refer to those described with respect to the abovementioned methods.

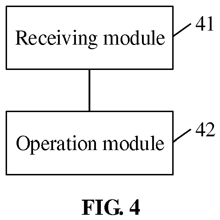

As shown in FIG. 4, an inter-carrier frequency cooperation device is arranged in a second communication node, and includes a receiving module 41 and an operation module 42.

The receiving module 41 is configured to receive description information of a second carrier frequency, sent by a first communication node via a first carrier frequency. The description information of the second carrier frequency includes one of: sending beam information of the second carrier frequency, pilot information of the second carrier frequency, control channel information of the second carrier frequency, data channel information of the second carrier frequency, HARQ timing information of the second carrier frequency and working time information of the second communication node on the second carrier frequency.

The operation module 42 is configured to perform an operation according to the description information of the second carrier frequency.

Optionally, the sending beam information of the second carrier frequency includes at least one of: the number of sending beams, sending beam set information and indication information of resources of sending beams.

Herein, the number N of sending beams may be smaller than a total number of sending beams on the second carrier frequency.

Herein, the sending beams may at least include a first sending beam set and a second sending beam set.

Herein, a sending period of the sending beams in the first sending beam set may be longer than a sending period of the sending beams in the second sending beam set.

The operation module 42 is configured to select the sending beam set to be received according to the sending beam set information in the description information of the second carrier frequency.

Herein, the sending beam set information may include: a relationship between at least one sending beam in the first sending beam set and X sending beams in the second sending beam set, X being larger than 1.

Herein, the operation module 42 is configured to, when the operation module 42 works on the second carrier frequency, receive the sending beams in the first sending beam set at first, select one or more sending beams with highest signal receiving quality, and determine sending beams to be received in the second sending beam set based on the relationship between the selected sending beams and the sending beams in the second sending beam set in the description information of the second carrier frequency.

Optionally, the pilot information of the second carrier frequency includes at least one of: a pilot type, indication information of time-frequency resources used by different types of pilots, feedback modes corresponding to different types of pilots and channel estimation parameters based on different pilot types.

Herein, the pilot type at least includes a first pilot type and a second pilot type.

The operation module 42 is configured to determine that the number of ports corresponding to the first pilot type is larger than the number of ports corresponding to the second pilot type according to the description information of the second carrier frequency.

Herein, the operation module 42 is further configured to when working on the second carrier frequency, obtain global channel information via the first pilot type, and further determine the second pilot type to be received.

Herein, different codebook sets may be used in the feedback modes for different pilot types.

The operation module 42 is configured to, when the operation module 42 works on the second carrier frequency, determine codebook information according to a channel condition based on the first pilot type and/or based on the second pilot type, and feedback the codebook information to the first communication node.

Herein, the channel estimation parameters may at least include parameters related to a channel estimation algorithm used by the second communication node.

The operation module 42 is configured to, when working on the second carrier frequency, use the corresponding channel estimation algorithm according to the description information of the second carrier frequency.

Optionally, the control channel information of the second carrier frequency includes at least one of: a sending period of a control channel, control information contained in the control channel and indication information of a resource used for sending the control channel.

The operation module 42 is configured to receive the control channel on the second carrier frequency according to the description information of the second carrier frequency.

Herein, when a frequency band of the second carrier frequency is higher than a frequency band of the first carrier frequency, the sending period of the control channel sent on the second carrier frequency may be shorter than a sending period of a control channel sent on the first carrier frequency.

Herein, when the frequency band of the second carrier frequency is higher than the frequency band of the first carrier frequency, the number of bits describing resource allocation information in the control information contained in the control channel sent on the second carrier frequency may be smaller than the number of bits describing resource allocation information in control information contained in the control channel sent on the first carrier frequency.

Herein, when the frequency band of the second carrier frequency is higher than the frequency band of the first carrier frequency, a bandwidth occupied by the control channel sent on the second carrier frequency may be larger than a bandwidth occupied by the control channel sent on the first carrier frequency.

Herein, there may be multiple types of control channels, and sending periods of different types of control channels may be different.

Herein, the control channel may be, but not limited to, a unicast control channel.

Optionally, the data channel information of the second carrier frequency includes at least one of: extended sequence information used when the second communication node sends data and indication information of a carrier frequency used when the second communication node sends retransmitted data.

Herein, the extended sequence information used when the second communication node sends the data may include at least one of: a generation manner for a spread spectrum sequence, a mapping relationship between the spread spectrum sequence and a sending resource and a selection method for the spread spectrum sequence.

The operation module 42 is configured to send the data on the second carrier frequency according to the extended sequence information in the description information of the second carrier frequency.

Herein, the carrier frequency used when the second communication node sends the retransmitted data may be different from the first carrier frequency and the second carrier frequency.

Optionally, the description information of the second carrier frequency further includes: a time t2 of sending ACK or NAK information generated by the second communication node for a decoding condition of a downlink data packet sent at a time t1 on the second carrier frequency.

Herein, a difference value t2-t1 between the time t2 of sending the ACK or NAK information and the time t1 of sending the downlink data packet may be smaller than a difference value between a time of sending ACK or NAK information corresponding to a downlink data packet sent on the first carrier frequency and a time of sending the downlink data packet.

Optionally, the HARQ timing information of the second carrier frequency includes: a moment when the second communication node feeds back HARQ information for a physical data packet sent on the second carrier frequency.

When the frequency band of the second carrier frequency is higher than the frequency band of the first carrier frequency, the moment when the second communication node feeds back the HARQ information for the physical data packet sent on the second carrier frequency is earlier than a transmission ending moment of the physical data packet.

The operation module 42 is configured to feedback the HARQ information for the physical data packet sent on the second carrier frequency at the corresponding moment according to the description information of the second carrier frequency.

Herein, a length of the physical data packet sent on the second carrier frequency may be larger than a maximum physical data packet length allowed to be sent on the first carrier frequency.

Optionally, the working time information of the second communication node on the second carrier frequency refers to a time period when the second communication node receives the control channel on the second carrier frequency.

The operation module 42 is configured to receive the control channel on the second carrier frequency within the corresponding time period according to the description information of the second carrier frequency.

Other implementation details may refer to those described with respect to the abovementioned methods.

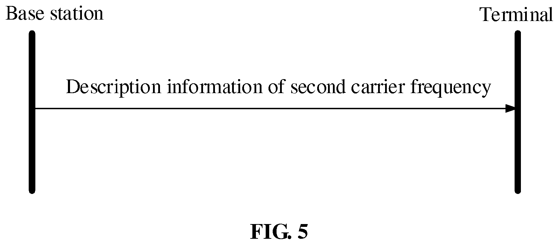

Further descriptions will be made below from the view of a base station in combination with FIG. 5 and embodiments A1∼A18.

### Embodiment A1

It is assumed that there are totally M (M is an integer more than 1) sending beams on a carrier frequency f2.The base station determines a geographical position relationship with a terminal via channel state information (for example, angle information) of the terminal on a carrier frequency f1 and then determines that the sending beams in N directions (N is an integer less than or equal to M) on the carrier frequency f2 may be successfully received by the terminal. As such, description information of the carrier frequency f2 at least includes the number N of the sending beams.

The base station sends the description information of the carrier frequency f2 to the terminal via the carrier frequency f1.

The foregoing has such an advantage that the terminal may receive fewer beams on the carrier frequency f2 so as to reduce energy consumption of the terminal.

### Embodiment A2

It is assumed that there are M sending beams on a carrier frequency f2 and the M sending beams are grouped into two groups, called a first sending beam set and a second sending beam set respectively. A sending period of the sending beams in the first sending beam set is longer than a sending period of the sending beams in the second sending beam set. Then, description information of the carrier frequency f2 at least includes sending beam set information, for example, the number of the sets and the sending period of each of the sets.

A base station sends the description information of the carrier frequency f2 to a terminal via a carrier frequency f1.

The foregoing has such advantages that the base station may determine different sending beam sets according to different service delay requirements, and the terminal may also select to receive a proper sending beam set according to own service condition.

### Embodiment A3

It is assumed that there are M sending beams on a carrier frequency f2 and the M sending beams are grouped into two groups, called a first sending beam set and a second sending beam set respectively. A direction of at least one sending beam in the first sending beam set includes directions of X (X is larger than 1) sending beams in the second sending beam set. That is, when a terminal works on the carrier frequency f2, the sending beams in the first sending beam set are received at first, one or more sending beams with highest signal receiving quality are selected, and then specific sending beams, tried to be received, in the second sending beam set are determined based on a relationship between these sending beams and the sending beams in the second sending beam set. Therefore, description information of the carrier frequency f2 at least includes sending beam set information. The beam set information includes: a relationship between the at least one sending beam in the first sending beam set and the X sending beams in the second sending beam set, X being an integer more than 1.

A base station sends the description information of the carrier frequency f2 to the terminal via a carrier frequency f1.

The foregoing has such advantages that the terminal may rapidly determine an optimal sending beam of the base station based on sending beam classification, thereby reducing energy consumption of the terminal, and improving network quality.

### Embodiment A4

It is assumed that there are M sending beams on a carrier frequency f2. Then, description information of the carrier frequency f2 at least includes resources used for the sending beams. For example, completely different resources are used for the M sending beams, or the M sending beams are grouped into Y groups (Y is an integer more than 1), the same resource is used for the sending beams in each of the groups, and different resources are used for different groups.

A base station sends the description information of the carrier frequency f2 to a terminal via a carrier frequency f1.

The foregoing has such an advantage that the terminal tries to receive the sending beams on different resources to rapidly select optimal sending beams of the base station via a relationship between the resources and the sending beams.

### Embodiment A5

It is assumed that there are two pilot types on a carrier frequency f2, called a first pilot type and a second pilot type respectively, and the number of antenna ports corresponding to the first pilot type is larger than that of antenna ports corresponding to the second pilot type.

A base station sends description information of the carrier frequency f2 to a terminal via a carrier frequency f1.

The foregoing has such an advantage that the terminal obtains global channel information via the first pilot type, and further determines the second pilot type to be received for better beam selection.

### Embodiment A6

It is assumed that there are two pilot types on a carrier frequency f2, called a first pilot type and a second pilot type respectively, and a codebook set corresponding to the first pilot type is different from a codebook set corresponding to the second pilot type.

A base station sends description information of the carrier frequency f2 to a terminal via a carrier frequency f1.

The foregoing has such an advantage that the terminal determines codebook information according to its own channel condition based on the first pilot type and/or based on the second pilot type, and feeds back the codebook information to the base station, and the base station selects a proper codebook to transmit downlink data according to a data transmission condition.

### Embodiment A7

It is assumed that there are two pilot types on a carrier frequency f2, called a first pilot type and a second pilot type respectively, and a channel estimation algorithm corresponding to the first pilot type is different from a channel estimation algorithm corresponding to the second pilot type. For example, for the first pilot type, a terminal is suggested to use a compressed sensing technology with relatively higher complexity. For the second pilot type, a minimum mean square error manner is used.

A base station sends description information of the carrier frequency f2 to the terminal via a carrier frequency f1.

The foregoing has such an advantage that the terminal is notified to use different channel estimation algorithms and related algorithm parameters according to requirements of different pilot types, so that environmental adaptability of a system is improved.

### Embodiment A8

It is assumed that a frequency band of a carrier frequency f2 is higher than a frequency band of f1, and a sending period of a control channel sent on the carrier frequency f2 is shorter than a sending period of a control channel sent on the carrier frequency f1.

A base station sends description information of the carrier frequency f2 to a terminal via the carrier frequency f1.

This is because the carrier frequency f2 works on a high frequency band and an available continuous bandwidth is relatively larger. If an Orthogonal Frequency Division Multiplexing (OFDM) manner is adopted, considering hardware implementation complexity, a subcarrier spacing may be designed to be relatively larger, for example, 300KHz, then the sending period of the control channel may be shorter. When the terminal receives the control channel from the carrier frequency f2, a transmission delay of a system may be reduced, and a better experience may be provided for a user.

### Embodiment A9

It is assumed that a frequency band of a carrier frequency f2 is higher than a frequency band of f1, and the number of bits describing resource allocation information in control information contained in a control channel sent on the carrier frequency f2 is smaller than the number of bits describing resource allocation information in control information contained in a control channel sent on the carrier frequency f1.

A base station sends description information of the carrier frequency f2 to a terminal via a carrier frequency f1.

The foregoing has such an advantage that the carrier frequency f2 works on a high frequency band, and thus a time division manner rather than a time-frequency resource block allocation manner used for the carrier frequency f1 may be considered to be used to allocate resources to the terminal, so that resource allocation description overhead is effectively reduced, and overall spectrum efficiency of a system is improved.

### Embodiment A10

It is assumed that a frequency band of a carrier frequency f2 is higher than a frequency band of f1, and a bandwidth occupied by a control channel sent on the carrier frequency f2 is larger than a bandwidth occupied by a control channel sent on the carrier frequency f1.

A base station sends description information of the carrier frequency f2 to a terminal via the carrier frequency f1.

The foregoing has such an advantage that transmission time occupied by the control channel on the carrier frequency f2 is effectively reduced, and a service experience of a user is improved.

### Embodiment A11

It is assumed that a frequency band of a carrier frequency f2 is higher than a frequency band of f1, there are multiple types of control channels sent on the carrier frequency f2, and sending periods of different types of control channels are different.

Optionally, the control channels are unicast control channels.

A base station sends description information of the carrier frequency f2 to a terminal via the carrier frequency f1.

The foregoing has such an advantage that unicast control channels with different periods are used to provide service for users according to service types for the users, and the same terminal may also receive unicast control channels with multiple periods according to requirements of user services, so that adaptability of a system to the user services is improved.

### Embodiment A12

It is assumed that a spread spectrum manner is adopted for data channel sending of a terminal on a carrier frequency f2.

A base station sends description information of the carrier frequency f2 to the terminal via a carrier frequency f1. Optionally, the description information includes a generation manner for a spread spectrum sequence.

The foregoing has such an advantage that the terminal may generate a proper uplink spread spectrum sequence to rapidly send uplink data according to the generation manner for the spread spectrum sequence.

### Embodiment A13

It is assumed that a spread spectrum manner is adopted for data channel sending of a terminal on a carrier frequency f2.

A base station sends description information of the carrier frequency f2 to the terminal via a carrier frequency f1. Optionally, the description information includes a mapping relationship between a spread spectrum sequence and a sending resource.

The foregoing has such an advantage that the terminal may determine a sending resource according to a selected spread spectrum sequence, or select a proper spread spectrum sequence according to a sending resource, thereby reducing system control overhead, and fully utilizing the characteristic of free sending of the spread spectrum manner.

### Embodiment A14

It is assumed that a spread spectrum manner is adopted for data channel sending of a terminal on a carrier frequency f2.

A base station sends description information of the carrier frequency f2 to the terminal via a carrier frequency f1. Optionally, the description information includes a selection method for a spread spectrum sequence.

The foregoing has the following advantage. The terminal may flexibly select a proper spread spectrum sequence to send uplink data according to the selection method for the spread spectrum sequence and a transmission requirement. For example, the terminal selects different spread spectrum sequences according to different services. A long-period spread spectrum sequence is selected in case of high delay tolerance, and a short-period spread spectrum sequence is selected in case of low delay tolerance.

### Embodiment A15

A base station sends description information of a carrier frequency f2 to a terminal via a carrier frequency f1. Optionally, the description information includes indication information of a carrier frequency f3 used when the terminal sends retransmitted data. It is noted that data transmitted for the first time is sent on the carrier frequency f2. Optionally, the carrier frequency f3 is different from the carrier frequency f2, and is also different from the carrier frequency f1.

The foregoing has such an advantage that system design complexity caused by HARQ feedback is effectively reduced, and a timing relationship on part of carrier frequencies is kept as much as possible.

### Embodiment A16

A base station sends description information of a carrier frequency f2 to a terminal via a carrier frequency f1. Optionally, the description information includes a sending time t2 of ACK or NAK information generated by the terminal for a decoding condition of a downlink data packet sent at a time t1 on the carrier frequency f2. Optionally, a difference value (t2-t1) between the sending time of the ACK or NAK information and the sending time of the downlink data packet is smaller than a difference value between a sending time of ACK or NAK information corresponding to a downlink data packet sent on the carrier frequency f1 and a sending time of the downlink data packet. For example, when a Long Term Evolution (LTE) manner is adopted on the carrier frequency f1, the difference value is 4ms.

The foregoing has such an advantage that a user data transmission delay is effectively reduced, and a user experience is improved.

### Embodiment A17

A base station sends description information of a carrier frequency f2 to a terminal via a carrier frequency f1. Optionally, HARQ timing information of the second carrier frequency includes: a moment when the terminal feeds back HARQ information for a downlink physical data packet sent on the carrier frequency f2.When a frequency band of f2 is higher than a frequency band of f1, the moment when the terminal feeds back the HARQ information for the downlink physical data packet sent on the carrier frequency f2 is earlier than a transmission ending moment of the physical data packet.

Optionally, a length of the physical data packet sent on the carrier frequency f2 is larger than a maximum physical data packet length allowed to be sent on the carrier frequency f1.

The foregoing has the following advantage. When a transmitted data packet is relatively longer, the terminal may judge a possible decoding condition of the whole data packet according to a condition of part of the data packet which has been decoded under the condition that the data packet is not completely decoded, and feed back a predicted decoding result of the decoding condition to the base station when the data packet is not completely sent, so that the base station may make a scheduling decision in advance, and a system delay is improved.

### Embodiment A18

A base station sends description information of a carrier frequency f2 to a terminal via a carrier frequency f1. Optionally, the description information includes time information of the terminal working on the carrier frequency f2, i.e. a time period when the terminal receives a control channel on the carrier frequency f2.

The foregoing has the following advantages. The terminal tries to decode a control channel related to itself on the carrier frequency f2 within the corresponding time period, and is not required to decode control channels on the carrier frequency f2 within other time periods, so that energy consumption of the terminal is reduced and standby time of the terminal is prolonged.

Further descriptions will be made below from the view of a terminal in combination with FIG. 5 and embodiments B1∼18.

### Embodiment B1

It is assumed that there are totally M (M is an integer more than 1) sending beams on a carrier frequency f2.A base station determines a geographical position relationship with a terminal via channel state information (for example, angle information) of the terminal on a carrier frequency f1 and then judges that the sending beams in N directions (N is an integer less than or equal to M) on the carrier frequency f2 may be successfully received by the terminal. As such, description information of the carrier frequency f2 at least includes the number N of the sending beams.

The terminal receives the description information of the carrier frequency f2, sent by the base station via the carrier frequency f1.

The foregoing has such an advantage that the terminal may receive fewer beams on the carrier frequency f2, so that energy consumption of the terminal is reduced.

### Embodiment B2

It is assumed that there are M sending beams on a carrier frequency f2. The M sending beams are grouped into two groups, called a first sending beam set and a second sending beam set respectively, and a sending period of the sending beams in the first sending beam set is longer than a sending period of the sending beams in the second sending beam set. Then, description information of the carrier frequency f2 at least includes sending beam set information, for example, the number of the sets and the sending period of each of the sets.

A terminal receives the description information of the carrier frequency f2, sent by a base station via a carrier frequency f1.

The foregoing has the following advantages. The base station may determine different sending beam sets according to different service delay requirements. The terminal may also select to receive a proper sending beam set according to its own service condition.

### Embodiment B3

It is assumed that there are M sending beams on a carrier frequency f2. The M sending beams are grouped into two groups, called a first sending beam set and a second sending beam set respectively. A direction of at least one sending beam in the first sending beam set includes directions of X (X is larger than 1) sending beams in the second sending beam set. That is, when a terminal works on the carrier frequency f2, the sending beams in the first sending beam set are received at first, one or more sending beams with highest signal receiving quality are selected, and then specific sending beams, tried to be received, in the second sending beam set are determined based on a relationship between these sending beams and the sending beams in the second sending beam set. Therefore, description information of the carrier frequency f2 at least includes sending beam set information, and the beam set information includes: a relationship between the at least one sending beam in the first sending beam set and the X sending beams in the second sending beam set, X being an integer more than 1.

The terminal receives the description information of the carrier frequency f2, sent by a base station via a carrier frequency f1.

The foregoing has the following advantages. The terminal may rapidly determine an optimal sending beam of the base station in a sending beam classification manner, thereby reducing energy consumption of the terminal, and improving network quality.

### Embodiment B4

It is assumed that there are M sending beams on a carrier frequency f2. Then, description information of the carrier frequency f2 at least includes resources used for the sending beams. For example, the M sending beams use completely different resources. Alternatively, the M sending beams are grouped into Y groups (Y is an integer more than 1), the same resource is used for the sending beams in each of the groups, and different resources are used for different groups.

A terminal receives the description information of the carrier frequency f2, sent by a base station via a carrier frequency f1.

The foregoing has such an advantage that the terminal tries to receive the sending beams on different resources to rapidly select optimal sending beams of the base station via a relationship between the resources and the sending beams.

### Embodiment B5

It is assumed that there are two pilot types on a carrier frequency f2, called a first pilot type and a second pilot type respectively. The number of antenna ports corresponding to the first pilot type is larger than that corresponding to the second pilot type.

A terminal receives description information of the carrier frequency f2, sent by a base station via a carrier frequency f1.

The foregoing has such an advantage that the terminal obtains global channel information via the first pilot type, and further determines the second pilot type to be received for better beam selection.

### Embodiment B6

It is assumed that there are two pilot types on a carrier frequency f2, called a first pilot type and a second pilot type respectively. A codebook set corresponding to the first pilot type is different from a codebook set corresponding to the second pilot type.

A terminal receives description information of the carrier frequency f2, sent by a base station via a carrier frequency f1.

The foregoing has the following advantages. The terminal determines codebook information according to its own channel condition based on the first pilot type and/or based on the second pilot type, and feeds back the codebook information to the base station. The base station selects a proper codebook to transmit downlink data according to a data transmission condition.

### Embodiment B7

It is assumed that there are two pilot types on a carrier frequency f2, called a first pilot type and a second pilot type respectively. A channel estimation algorithm corresponding to the first pilot type is different from a channel estimation algorithm corresponding to the second pilot type. For example, for the first pilot type, a terminal is suggested to use a compressed sensing technology with relatively higher complexity. For the second pilot type, a minimum mean square error manner is used.

The terminal receives description information of the carrier frequency f2, sent by a base station via a carrier frequency f1.

The foregoing has such an advantage that the terminal is notified to use different channel estimation algorithms and related algorithm parameters according to requirements of different pilot types, thereby improving system environmental adaptability.

### Embodiment B8

It is assumed that a frequency band of a carrier frequency f2 is higher than a frequency band of f1, and a sending period of a control channel sent on the carrier frequency f2 is shorter than a sending period of a control channel sent on the carrier frequency f1.

A terminal receives description information of the carrier frequency f2, sent by a base station via a carrier frequency f1.

This is because the carrier frequency f2 works on a high frequency band and an available continuous bandwidth is relatively larger. If an OFDM manner is adopted, considering hardware implementation complexity, a subcarrier spacing may be designed to be relatively larger, for example, 300KHz, and thus the sending period of the control channel may be shorter. When the terminal receives the control channel from the carrier frequency f2, a transmission delay of a system may be reduced, and a better experience may be provided for a user.

### Embodiment B9

It is assumed that a frequency band of a carrier frequency f2 is higher than a frequency band of f1.The number of bits describing resource allocation information in control information contained in a control channel sent on the carrier frequency f2 is smaller than the number of bits describing resource allocation information in control information contained in a control channel sent on the carrier frequency f1.

A terminal receives description information of the carrier frequency f2, sent by a base station via a carrier frequency f1.

The foregoing has the following advantages. The carrier frequency f2 works on a high frequency band. A time division manner rather than a time-frequency resource block allocation manner used for the carrier frequency f1 may be considered to be used to allocate a resource to the terminal, thereby effectively reducing resource allocation description overhead, and improving overall spectrum efficiency of a system.

### Embodiment B10

It is assumed that a frequency band of a carrier frequency f2 is higher than a frequency band of f1, and a bandwidth occupied by a control channel sent on the carrier frequency f2 is larger than a bandwidth occupied by a control channel sent on the carrier frequency f1.

A terminal receives the description information of the carrier frequency f2, sent by a base station via the carrier frequency f1.

The foregoing has such an advantage that transmission time occupied by the control channel on the carrier frequency f2 is effectively reduced and a service experience of a user is improved.

### Embodiment B11

It is assumed that a frequency band of a carrier frequency f2 is higher than a frequency band of f1. There are multiple types of control channels sent on the carrier frequency f2, and sending periods of different types of control channels are different.

Optionally, the control channels are unicast control channels.

A terminal receives description information of the carrier frequency f2, sent by a base station via the carrier frequency f1.

The foregoing has the following advantages. Unicast control channels with different periods are used to provide service for users according to service types of the users. The same terminal may also receive unicast control channels with multiple periods according to requirements of user services, thereby improving system adaptability to the user services.

### Embodiment B12

It is assumed that a spread spectrum manner is adopted for a terminal to send a data channel on a carrier frequency f2.

The terminal receives description information of the carrier frequency f2, sent by a base station via a carrier frequency f1. Optionally, the description information includes a generation manner for a spread spectrum sequence.

The foregoing has such an advantage that the terminal may generate a proper uplink spread spectrum sequence to rapidly send uplink data according to the generation manner for the spread spectrum sequence.

### Embodiment B13

It is assumed that a spread spectrum manner is adopted for a terminal to send a data channel on a carrier frequency f2.

The terminal receives description information of the carrier frequency f2, sent by a base station via a carrier frequency f1. Optionally, the description information includes a mapping relationship between a spread spectrum sequence and a sending resource.

The foregoing has the following advantage. The terminal may determine a sending resource according to a selected spread spectrum sequence, or select a proper spread spectrum sequence according to a sending resource, thereby reducing system control overhead, and fully utilizing the characteristic of free sending of the spread spectrum manner.

### Embodiment B14

It is assumed that a spread spectrum manner is adopted for a terminal to send a data channel on a carrier frequency f2.

The terminal receives description information of the carrier frequency f2, sent by a base station via a carrier frequency f1. Optionally, the description information includes a selection method for a spread spectrum sequence.

The foregoing has the following advantages. The terminal may flexibly select a proper spread spectrum sequence to send uplink data according to the selection method for the spread spectrum sequence and a transmission requirement. For example, the terminal selects different spread spectrum sequences according to different services. A long-period spread spectrum sequence is selected in case of high delay tolerance, and a short-period spread spectrum sequence is selected in case of low delay tolerance.

### Embodiment B15

A terminal receives description information of a carrier frequency f2, sent by a base station via a carrier frequency f1. Optionally, the description information includes indication information of a carrier frequency f3 used when the terminal sends retransmitted data. It is noted that data transmitted for the first time is sent on the carrier frequency f2. Optionally, the carrier frequency f3 is different from the carrier frequency f2, and is also different from the carrier frequency f1.

The foregoing has such an advantage that system design complexity caused by HARQ feedback is effectively reduced, and a timing relationship on part of carrier frequencies is kept as much as possible.

### Embodiment B16

A terminal receives description information of a carrier frequency f2, sent by a base station via a carrier frequency f1. Optionally, the description information includes a time t2 of sending ACK or NAK information generated by the terminal for a decoding condition of a downlink data packet sent at a time t1 on the carrier frequency f2. Optionally, a difference value (t2-t1) between the time of sending the ACK or NAK information and the time of sending the downlink data packet is smaller than a difference value between a time of sending ACK or NAK information corresponding to a downlink data packet sent on the carrier frequency f1 and a time of sending the downlink data packet. For example, when an LTE manner is adopted on the carrier frequency f1, the difference value is 4ms.

The foregoing has such an advantage that a user data transmission delay is effectively reduced, and a user experience is improved.

### Embodiment B17

A terminal receives description information of a carrier frequency f2, sent by a base station via a carrier frequency f1. Optionally, HARQ timing information of the second carrier frequency includes: a moment when the terminal feeds back HARQ information for a downlink physical data packet sent on the carrier frequency f2.When a frequency band of f2 is higher than a frequency band of f1, the moment when the terminal feeds back the HARQ information for the downlink physical data packet sent on the carrier frequency f2 is earlier than a transmission ending moment of the physical data packet.

Optionally, a length of the physical data packet sent on the carrier frequency f2 is larger than a maximum physical data packet length allowed to be sent on the carrier frequency f1.

The foregoing has the following advantages. When a transmitted data packet is relatively longer, the terminal may judge a possible decoding condition of the whole data packet according to a condition of part of the data packet which has been decoded under the condition that the data packet is not completely decoded, and feedback a predicted decoding result of the decoding condition to the base station when the data packet is not completely sent, so that the base station may make a scheduling decision in advance, and a system delay is improved.

### Embodiment B18

A terminal receives description information of a carrier frequency f2, sent by a base station via a carrier frequency f1. Optionally, the description information includes time information of the terminal working on the carrier frequency f2, i.e. a time period when the terminal receives a control channel on the carrier frequency f2.

The foregoing has the following advantages. The terminal tries to decode a control channel related to itself on the carrier frequency f2 within the corresponding time period, and is not required to decode control channels on the carrier frequency f2 within other time periods, thereby reducing energy consumption of the terminal, and prolonging standby time of the terminal.

Those skilled in the art should know that all or part of steps of the embodiment may be implemented by a computer program. The computer program may be stored in a computer-readable storage medium. The computer program is executed on a corresponding hardware platform (for example, a system, equipment, a device and an apparatus). During execution, one or combination of the steps of the method embodiment is included.

Optionally, all or part of steps of the embodiments may also be implemented by an integrated circuit. These steps may form multiple integrated circuit modules respectively, or multiple modules or steps therein may form a single integrated circuit module for implementation.

The devices/function modules/function units in the embodiments may be implemented by adopting a universal computing device. They may be concentrated on a single computing device, and may also be distributed on a network formed by multiple computing devices.

When being implemented in form of software function module and sold or used as an independent product, each device/function module/function unit in the embodiments may be stored in a computer-readable storage medium. The abovementioned computer-readable storage medium may be a read-only memory, a magnetic disk, an optical disk or the like.

### INDUSTRIAL APPLICABILITY

The inter-carrier frequency cooperation solution disclosed by the embodiments of the disclosure may fully develop a system capacity improvement capability by use of a high frequency band in a 5th-generation mobile communication system and improve quality of service of the whole mobile communication system.

## Claims

1. An inter-carrier frequency cooperation method, comprising:
determining description information of a second carrier frequency (101); and
sending, by a first communication node, the description information of the second carrier frequency to a second communication node via a first carrier frequency (102), and the description information of the second carrier frequency at least comprising control channel information of the second carrier frequency;
wherein the control channel information of the second carrier frequency comprises one of:
a sending period of a control channel, wherein when a frequency band of the second carrier frequency is higher than a frequency band of the first carrier frequency, the sending period of a control channel sent on the second carrier frequency is shorter than a sending period of a control channel sent on the first carrier frequency;
control information contained in the control channel, wherein when a frequency band of the second carrier frequency is higher than a frequency band of the first carrier frequency, the number of bits describing resource allocation information in control information contained in a control channel sent on the second carrier frequency is smaller than the number of bits describing resource allocation information in control information contained in a control channel sent on the first carrier frequency; and
indication information of a resource used for sending the control channel, wherein when a frequency band of the second carrier frequency is higher than a frequency band of the first carrier frequency, a bandwidth occupied by a control channel sent on the second carrier frequency is larger than a bandwidth occupied by a control channel sent on the first carrier frequency.

2. The method according to claim 1, wherein the description information of the second carrier frequency further comprises sending beam information of the second carrier frequency, and
the sending beam information of the second carrier frequency comprises one of: a number of sending beams, sending beam set information and indication information of resources of sending beams.

3. The method according to claim 1, wherein the description information of the second carrier frequency further comprises pilot information of the second carrier frequency, and
the pilot information of the second carrier frequency comprises one of: a pilot type, indication information of time-frequency resources used by different types of pilots, feedback modes corresponding to different types of pilots and channel estimation parameters based on different pilot types.

4. The method according to claim 1, wherein the description information of the second carrier frequency further comprises data channel information of the second carrier frequency, and
the data channel information of the second carrier frequency comprises one of:
extended sequence information used when the second communication node sends data and indication information of a carrier frequency used when the second communication node sends retransmitted data.

5. The method according to claim 1, wherein the description information of the second carrier frequency further comprises:
a sending time t2 of Acknowledgement, ACK, or Negative Acknowledgement ,NAK, information generated by the second communication node for a decoding condition of a downlink data packet sent at a time t1 on the second carrier frequency.

6. The method according to claim 1, wherein the description information of the second carrier frequency further comprises Hybrid Automatic Repeat Request, HARQ, timing information of the second carrier frequency,
the HARQ timing information of the second carrier frequency comprising:
a moment when the second communication node feeds back HARQ information for a physical data packet sent on the second carrier frequency;
wherein when the frequency band of the second carrier frequency is higher than the frequency band of the first carrier frequency, the moment when the second communication node feeds back the HARQ information for the physical data packet sent on the second carrier frequency is earlier than a transmission ending moment of the physical data packet.

7. The method according to claim 1, wherein the description information of the second carrier frequency further comprises working time information of the second communication node on the second carrier frequency, and
the working time information of the second communication node on the second carrier frequency refers to a time period when the second communication node receives a control channel on the second carrier frequency.

8. An inter-carrier frequency cooperation method, comprising:
receiving, by a second communication node, description information of a second carrier frequency, sent by a first communication node via a first carrier frequency (201), and the description information of the second carrier frequency at least comprising control channel information of the second carrier frequency; and
performing, by the second communication node, an operation according to the description information of the second carrier frequency (202);
wherein the control channel information of the second carrier frequency comprises one of:
a sending period of a control channel, wherein when a frequency band of the second carrier frequency is higher than a frequency band of the first carrier frequency, the sending period of a control channel sent on the second carrier frequency is shorter than a sending period of a control channel sent on the first carrier frequency;
control information contained in the control channel, wherein when a frequency band of the second carrier frequency is higher than a frequency band of the first carrier frequency, the number of bits describing resource allocation information in control information contained in a control channel sent on the second carrier frequency is smaller than the number of bits describing resource allocation information in control information contained in a control channel sent on the first carrier frequency; and
indication information of a resource used for sending the control channel, wherein when a frequency band of the second carrier frequency is higher than a frequency band of the first carrier frequency, a bandwidth occupied by a control channel sent on the second carrier frequency is larger than a bandwidth occupied by a control channel sent on the first carrier frequency.

9. The method according to claim 8, wherein the description information of the second carrier frequency further comprises sending beam information of the second carrier frequency,
the sending beam information of the second carrier frequency comprises one of: a number of sending beams, sending beam set information and indication information of resources of sending beams; and
the sending beams comprise a first sending beam set and a second sending beam set.

10. The method according to claim 8, wherein the description information of the second carrier frequency further comprises pilot information of the second carrier frequency,
the pilot information of the second carrier frequency comprises at least one of: a pilot type, indication information of time-frequency resources used by different types of pilots, feedback modes corresponding to different types of pilots and channel estimation parameters based on different pilot types;
the pilot type at least comprises a first pilot type and a second pilot type; and performing, by the second communication node, the operation according to the description information of the second carrier frequency comprises:
determining, by the second communication node, that the number of ports corresponding to the first pilot type is larger than the number of ports corresponding to the second pilot type according to the description information of the second carrier frequency.

11. The method according to claim 8, wherein performing, by the second communication node, the operation according to the description information of the second carrier frequency comprises:
receiving, by the second communication node, the control channel sent on the second carrier frequency according to the description information of the second carrier frequency.

12. The method according to claim 8, wherein the description information of the second carrier frequency further comprises data channel information of the second carrier frequency,
the data channel information of the second carrier frequency comprises one of: extended sequence information used when the second communication node sends data and indication information of a carrier frequency used when the second communication node sends retransmitted data;
the extended sequence information used when the second communication node sends the data comprises one of:
a generation manner for a spread spectrum sequence, a mapping relationship between a spread spectrum sequence and a sending resource and a selection method for a spread spectrum sequence; and
performing, by the second communication node, the operation according to the description information of the second carrier frequency comprises:
sending, by the second communication node, the data on the second carrier frequency according to the extended sequence information in the description information of the second carrier frequency, wherein the carrier frequency used when the second communication node sends the retransmitted data is different from the first carrier frequency and the second carrier frequency.

13. The method according to claim 8, wherein the description information of the second carrier frequency further comprises Hybrid Automatic Repeat Request, HARQ, timing information of the second carrier frequency,
the HARQ timing information of the second carrier frequency comprises:
a moment when the second communication node feeds back HARQ information for a physical data packet sent on the second carrier frequency;
when the frequency band of the second carrier frequency is higher than the frequency band of the first carrier frequency, the moment when the second communication node feeds back the HARQ information for the physical data packet sent on the second carrier frequency is earlier than a transmission ending moment of the physical data packet; and
performing, by the second communication node, the operation according to the description information of the second carrier frequency comprises:
feeding back, by the second communication node, the HARQ information for the physical data packet sent on the second carrier frequency at the moment according to the description information of the second carrier frequency.

14. The method according to claim 8, wherein the description information of the second carrier frequency further comprises working time information of the second communication node on the second carrier frequency,
the working time information of the second communication node on the second carrier frequency refers to a time period when the second communication node receives a control channel on the second carrier frequency; and
performing, by the second communication node, the operation according to the description information of the second carrier frequency comprises:
receiving, by the second communication node, the control channel on the second carrier frequency within the time period according to the description information of the second carrier frequency.

15. An inter-carrier frequency cooperation device, comprising:
a determination module (31), configured to determine description information of a second carrier frequency; and
a sending module (32), configured to send the description information of the second carrier frequency to a second communication node via a first carrier frequency, and the description information of the second carrier frequency at least comprising control channel information of the second carrier frequency;
wherein the control channel information of the second carrier frequency comprises one of:
a sending period of a control channel, wherein when a frequency band of the second carrier frequency is higher than a frequency band of the first carrier frequency, the sending period of a control channel sent on the second carrier frequency is shorter than a sending period of a control channel sent on the first carrier frequency;
control information contained in the control channel, wherein when a frequency band of the second carrier frequency is higher than a frequency band of the first carrier frequency, the number of bits describing resource allocation information in control information contained in a control channel sent on the second carrier frequency is smaller than the number of bits describing resource allocation information in control information contained in a control channel sent on the first carrier frequency; and
indication information of a resource used for sending the control channel, wherein when a frequency band of the second carrier frequency is higher than a frequency band of the first carrier frequency, a bandwidth occupied by a control channel sent on the second carrier frequency is larger than a bandwidth occupied by a control channel sent on the first carrier frequency.

16. An inter-carrier frequency cooperation device, arranged in a second communication node and comprising:
a receiving module (41), configured to receive description information of a second carrier frequency, sent by a first communication node via a first carrier frequency, and the description information of the second carrier frequency at least comprising control channel information of the second carrier frequency; and
an operation module (42), configured to perform an operation according to the description information of the second carrier frequency;
wherein the control channel information of the second carrier frequency comprises one of:
a sending period of a control channel, wherein when a frequency band of the second carrier frequency is higher than a frequency band of the first carrier frequency, the sending period of a control channel sent on the second carrier frequency is shorter than a sending period of a control channel sent on the first carrier frequency;
control information contained in the control channel, wherein when a frequency band of the second carrier frequency is higher than a frequency band of the first carrier frequency, the number of bits describing resource allocation information in control information contained in a control channel sent on the second carrier frequency is smaller than the number of bits describing resource allocation information in control information contained in a control channel sent on the first carrier frequency; and
indication information of a resource used for sending the control channel, wherein when a frequency band of the second carrier frequency is higher than a frequency band of the first carrier frequency, a bandwidth occupied by a control channel sent on the second carrier frequency is larger than a bandwidth occupied by a control channel sent on the first carrier frequency.

## Patentansprüche

1. Interträgerfrequenz-Kooperationsverfahren, umfassend:
Bestimmen von Beschreibungsinformationen einer zweiten Trägerfrequenz (101); und
Senden der Beschreibungsinformationen der zweiten Trägerfrequenz durch einen ersten Kommunikationsknoten an einen zweiten Kommunikationsknoten über eine erste Trägerfrequenz (102), und wobei die Beschreibungsinformationen der zweiten Trägerfrequenz zumindest Steuerkanalinformationen der zweiten Trägerfrequenz umfassen;
wobei die Steuerkanalinformationen der zweiten Trägerfrequenz eines von Folgendem umfassen:
eine Sendeperiode eines Steuerkanals, wobei, wenn ein Frequenzband der zweiten Trägerfrequenz höher ist als ein Frequenzband der ersten Trägerfrequenz, die Sendeperiode eines auf der zweiten Trägerfrequenz gesendeten Steuerkanals kürzer ist als eine Sendeperiode eines auf der ersten Trägerfrequenz gesendeten Steuerkanals;
Steuerinformationen, die in dem Steuerkanal enthalten sind, wobei, wenn ein Frequenzband der zweiten Trägerfrequenz höher ist als ein Frequenzband der ersten Trägerfrequenz, die Anzahl von Bits, die Ressourcenzuweisungsinformationen in Steuerinformationen beschreiben, die in einem auf der zweiten Trägerfrequenz gesendeten Steuerkanal enthalten sind, kleiner ist als die Anzahl von Bits, die Ressourcenzuweisungsinformationen in Steuerinformationen beschreiben, die in einem auf der ersten Trägerfrequenz gesendeten Steuerkanal enthalten sind; und
Anzeigeinformation einer Ressource, die zum Senden des Steuerkanals verwendet wird, wobei, wenn ein Frequenzband der zweiten Trägerfrequenz höher ist als ein Frequenzband der ersten Trägerfrequenz, eine Bandbreite, die von einem auf der zweiten Trägerfrequenz gesendeten Steuerkanal belegt wird, größer ist als eine Bandbreite, die von einem auf der ersten Trägerfrequenz gesendeten Steuerkanal belegt wird.

2. Verfahren nach Anspruch 1, wobei die Beschreibungsinformation der zweiten Trägerfrequenz ferner eine Sendestrahlinformation der zweiten Trägerfrequenz umfasst, und
die Sendestrahlinformation der zweiten Trägerfrequenz eines von Folgendem umfasst: eine Anzahl von Sendestrahlen, eine Sendestrahlsatzinformation und eine Anzeigeinformation von Ressourcen von Sendestrahlen.

3. Verfahren nach Anspruch 1, wobei die Beschreibungsinformation der zweiten Trägerfrequenz ferner eine Pilotinformation der zweiten Trägerfrequenz umfasst, und
die Pilotinformation der zweiten Trägerfrequenz eines der folgenden Elemente umfasst: einen Pilottyp, eine Anzeigeinformation von Zeit-Frequenz-Ressourcen, die von verschiedenen Typen von Piloten verwendet werden, Rückkopplungsmodi, die verschiedenen Typen von Piloten entsprechen, und Kanalschätzungsparameter, die auf verschiedenen Pilottypen basieren.

4. Verfahren nach Anspruch 1, wobei die Beschreibungsinformationen der zweiten Trägerfrequenz ferner Datenkanalinformationen der zweiten Trägerfrequenz umfassen, und
die Datenkanalinformationen der zweiten Trägerfrequenz eines der folgenden Elemente umfassen: erweiterte Sequenzinformationen, die verwendet werden, wenn der zweite Kommunikationsknoten Daten sendet, und Anzeigeinformationen einer Trägerfrequenz, die verwendet werden, wenn der zweite Kommunikationsknoten erneut übertragene Daten sendet.

5. Verfahren nach Anspruch 1, wobei die Beschreibungsinformation der zweiten Trägerfrequenz ferner umfasst:
einen Sendezeitpunkt t2 von Acknowledgement-, ACK-, oder Negative Acknowledgement-, NAK-, Information, die von dem zweiten Kommunikationsknoten für eine Dekodierbedingung eines Downlink-Datenpakets erzeugt wird, das zu einem Zeitpunkt t1 auf der zweiten Trägerfrequenz gesendet wurde.

6. Verfahren nach Anspruch 1, wobei die Beschreibungsinformation der zweiten Trägerfrequenz ferner eine Hybrid Automatic Repeat Request, HARQ, Timing-Information der zweiten Trägerfrequenz umfasst,
wobei die HARQ-Timing-Information der zweiten Trägerfrequenz umfasst: einen Zeitpunkt, zu dem der zweite Kommunikationsknoten HARQ-Informationen für ein auf der zweiten Trägerfrequenz gesendetes physikalisches Datenpaket zurückführt;
wobei, wenn das Frequenzband der zweiten Trägerfrequenz höher ist als das Frequenzband der ersten Trägerfrequenz, der Zeitpunkt, zu dem der zweite Kommunikationsknoten die HARQ-Informationen für das auf der zweiten Trägerfrequenz gesendete physikalische Datenpaket zurückführt, früher ist als ein Übertragungsendzeitpunkt des physikalischen Datenpakets.

7. Verfahren nach Anspruch 1, wobei die Beschreibungsinformation der zweiten Trägerfrequenz ferner eine Arbeitszeitinformation des zweiten Kommunikationsknotens auf der zweiten Trägerfrequenz umfasst, und
die Arbeitszeitinformation des zweiten Kommunikationsknotens auf der zweiten Trägerfrequenz sich auf eine Zeitperiode bezieht, in der der zweite Kommunikationsknoten einen Steuerkanal auf der zweiten Trägerfrequenz empfängt.

8. Verfahren zur Interträgerfrequenz-Kooperation, umfassend:
Empfangen von Beschreibungsinformationen einer zweiten Trägerfrequenz, die von einem ersten Kommunikationsknoten über eine erste Trägerfrequenz (201) gesendet werden, durch einen zweiten Kommunikationsknoten, wobei die Beschreibungsinformationen der zweiten Trägerfrequenz zumindest Steuerkanalinformationen der zweiten Trägerfrequenz umfassen; und
Ausführen einer Operation gemäß den Beschreibungsinformationen der zweiten Trägerfrequenz (202) durch den zweiten Kommunikationsknoten;
wobei die Steuerkanalinformation der zweiten Trägerfrequenz eine von einer Sendeperiode eines Steuerkanals umfasst,
wobei, wenn ein Frequenzband der zweiten Trägerfrequenz höher ist als ein Frequenzband der ersten Trägerfrequenz, die Sendeperiode eines auf der zweiten Trägerfrequenz gesendeten Steuerkanals kürzer ist als eine Sendeperiode eines auf der ersten Trägerfrequenz gesendeten Steuerkanals;
Steuerinformationen, die in dem Steuerkanal enthalten sind, wobei, wenn ein Frequenzband der zweiten Trägerfrequenz höher ist als ein Frequenzband der ersten Trägerfrequenz, die Anzahl von Bits, die Ressourcenzuweisungsinformationen in Steuerinformationen beschreiben, die in einem auf der zweiten Trägerfrequenz gesendeten Steuerkanal enthalten sind, kleiner ist als die Anzahl von Bits, die Ressourcenzuweisungsinformationen in Steuerinformationen beschreiben, die in einem auf der ersten Trägerfrequenz gesendeten Steuerkanal enthalten sind; und
Anzeigeinformation einer Ressource, die zum Senden des Steuerkanals verwendet wird, wobei, wenn ein Frequenzband der zweiten Trägerfrequenz höher ist als ein Frequenzband der ersten Trägerfrequenz, eine Bandbreite, die von einem auf der zweiten Trägerfrequenz gesendeten Steuerkanal belegt wird, größer ist als eine Bandbreite, die von einem auf der ersten Trägerfrequenz gesendeten Steuerkanal belegt wird.

9. Verfahren nach Anspruch 8, wobei die Beschreibungsinformationen der zweiten Trägerfrequenz ferner Sendestrahlinformationen der zweiten Trägerfrequenz umfassen,
wobei die Sendestrahlinformationen der zweiten Trägerfrequenz eines von Folgendem umfassen: eine Anzahl von Sendestrahlen, Sendestrahlensatzinformationen und Anzeigeinformationen von Ressourcen von Sendestrahlen; und
die Sendestrahlen umfassen einen ersten Sendestrahlensatz und einen zweiten Sendestrahlensatz.

10. Verfahren nach Anspruch 8, wobei die Beschreibungsinformationen der zweiten Trägerfrequenz ferner Pilotinformationen der zweiten Trägerfrequenz umfassen,
wobei die Pilotinformationen der zweiten Trägerfrequenz mindestens eines von einem Pilottyp, Anzeigeinformationen von Zeit-Frequenz-Ressourcen, die von verschiedenen Typen von Piloten verwendet werden, Rückkopplungsmodi, die verschiedenen Typen von Piloten entsprechen, und Kanalschätzungsparametern, die auf verschiedenen Pilottypen basieren, umfassen;
wobei der Pilottyp mindestens einen ersten Pilottyp und einen zweiten Pilottyp umfasst; und
das Durchführen der Operation gemäß den Beschreibungsinformationen der zweiten Trägerfrequenz durch den zweiten Kommunikationsknoten umfasst:
Bestimmen, durch den zweiten Kommunikationsknoten, dass die Anzahl von Anschlüssen, die dem ersten Pilottyp entspricht, größer ist als die Anzahl von Anschlüssen, die dem zweiten Pilottyp entspricht, gemäß der Beschreibungsinformation der zweiten Trägerfrequenz.

11. Verfahren nach Anspruch 8, wobei das Durchführen der Operation gemäß der Beschreibungsinformation der zweiten Trägerfrequenz durch den zweiten Kommunikationsknoten umfasst:
Empfangen des auf der zweiten Trägerfrequenz gesendeten Steuerkanals gemäß der Beschreibungsinformation der zweiten Trägerfrequenz durch den zweiten Kommunikationsknoten.

12. Verfahren nach Anspruch 8, wobei die Beschreibungsinformationen der zweiten Trägerfrequenz ferner Datenkanalinformationen der zweiten Trägerfrequenz umfassen,
wobei die Datenkanalinformationen der zweiten Trägerfrequenz eines umfassen von: erweiterten Sequenzinformationen, die verwendet werden, wenn der zweite Kommunikationsknoten Daten sendet, und Anzeigeinformationen einer Trägerfrequenz, die verwendet werden, wenn der zweite Kommunikationsknoten erneut übertragene Daten sendet;
wobei die erweiterten Sequenzinformationen, die verwendet werden, wenn der zweite Kommunikationsknoten die Daten sendet, eines umfassen von:
eine Erzeugungsmethode für eine Spreizspektrumssequenz, eine Abbildungsbeziehung zwischen einer Spreizspektrumssequenz und einer Senderessource und ein Auswahlverfahren für eine Spreizspektrumssequenz; und
das Durchführen der Operation gemäß der Beschreibungsinformation der zweiten Trägerfrequenz durch den zweiten Kommunikationsknoten umfasst:
das Senden der Daten auf der zweiten Trägerfrequenz durch den zweiten Kommunikationsknoten gemäß der erweiterten Sequenzinformation in der Beschreibungsinformation der zweiten Trägerfrequenz, wobei die Trägerfrequenz, die verwendet wird, wenn der zweite Kommunikationsknoten die erneut übertragenen Daten sendet, sich von der ersten Trägerfrequenz und der zweiten Trägerfrequenz unterscheidet.

13. Verfahren nach Anspruch 8, wobei die Beschreibungsinformation der zweiten Trägerfrequenz ferner eine Hybrid Automatic Repeat Request, HARQ, Timing-Information der zweiten Trägerfrequenz umfasst,
wobei die HARQ-Timing-Information der zweiten Trägerfrequenz umfasst:
einen Zeitpunkt, zu dem der zweite Kommunikationsknoten HARQ-Informationen für ein auf der zweiten Trägerfrequenz gesendetes physikalisches Datenpaket zurückführt;
wenn das Frequenzband der zweiten Trägerfrequenz höher ist als das Frequenzband der ersten Trägerfrequenz, ist der Zeitpunkt, zu dem der zweite Kommunikationsknoten die HARQ-Informationen für das auf der zweiten Trägerfrequenz gesendete physikalische Datenpaket zurückführt, früher als ein Übertragungsendzeitpunkt des physikalischen Datenpakets; und
das Durchführen der Operation durch den zweiten Kommunikationsknoten gemäß den Beschreibungsinformationen der zweiten Trägerfrequenz umfasst:
Rückführen der HARQ-Information für das auf der zweiten Trägerfrequenz gesendete physikalische Datenpaket durch den zweiten Kommunikationsknoten zu dem Zeitpunkt gemäß der Beschreibungsinformation der zweiten Trägerfrequenz.

14. Verfahren nach Anspruch 8, wobei die Beschreibungsinformation der zweiten Trägerfrequenz ferner eine Arbeitszeitinformation des zweiten Kommunikationsknotens auf der zweiten Trägerfrequenz umfasst,
wobei sich die Arbeitszeitinformation des zweiten Kommunikationsknotens auf der zweiten Trägerfrequenz auf eine Zeitperiode bezieht, in der der zweite Kommunikationsknoten einen Steuerkanal auf der zweiten Trägerfrequenz empfängt; und
das Ausführen der Operation gemäß der Beschreibungsinformation der zweiten Trägerfrequenz durch den zweiten Kommunikationsknoten umfasst:
Empfangen des Steuerkanals auf der zweiten Trägerfrequenz durch den zweiten Kommunikationsknoten innerhalb der Zeitperiode gemäß der Beschreibungsinformation der zweiten Trägerfrequenz.

15. Interträgerfrequenz-Kooperationsvorrichtung, die umfasst:
ein Bestimmungsmodul (31), das so konfiguriert ist, dass es Beschreibungsinformationen einer zweiten Trägerfrequenz bestimmt; und
ein Sendemodul (32), das so konfiguriert ist, dass es die Beschreibungsinformationen der zweiten Trägerfrequenz über eine erste Trägerfrequenz an einen zweiten Kommunikationsknoten sendet, und wobei die Beschreibungsinformationen der zweiten Trägerfrequenz wenigstens Steuerkanalinformationen der zweiten Trägerfrequenz umfassen;
wobei die Steuerkanalinformationen der zweiten Trägerfrequenz eines von Folgendem umfassen:
eine Sendeperiode eines Steuerkanals, wobei, wenn ein Frequenzband der zweiten Trägerfrequenz höher ist als ein Frequenzband der ersten Trägerfrequenz, die Sendeperiode eines auf der zweiten Trägerfrequenz gesendeten Steuerkanals kürzer ist als eine Sendeperiode eines auf der ersten Trägerfrequenz gesendeten Steuerkanals;
Steuerinformationen, die in dem Steuerkanal enthalten sind, wobei, wenn ein Frequenzband der zweiten Trägerfrequenz höher ist als ein Frequenzband der ersten Trägerfrequenz, die Anzahl von Bits, die Ressourcenzuweisungsinformationen in Steuerinformationen beschreiben, die in einem auf der zweiten Trägerfrequenz gesendeten Steuerkanal enthalten sind, kleiner ist als die Anzahl von Bits, die Ressourcenzuweisungsinformationen in Steuerinformationen beschreiben, die in einem auf der ersten Trägerfrequenz gesendeten Steuerkanal enthalten sind; und
Anzeigeinformation einer Ressource, die zum Senden des Steuerkanals verwendet wird, wobei, wenn ein Frequenzband der zweiten Trägerfrequenz höher ist als ein Frequenzband der ersten Trägerfrequenz, eine Bandbreite, die von einem auf der zweiten Trägerfrequenz gesendeten Steuerkanal belegt wird, größer ist als eine Bandbreite, die von einem auf der ersten Trägerfrequenz gesendeten Steuerkanal belegt wird.

16. Inter-Trägerfrequenz-Kooperationsvorrichtung, die in einem zweiten Kommunikationsknoten angeordnet ist und umfasst:
ein Empfangsmodul (41), das so konfiguriert ist, dass es Beschreibungsinformationen einer zweiten Trägerfrequenz empfängt, die von einem ersten Kommunikationsknoten über eine erste Trägerfrequenz gesendet werden, wobei die Beschreibungsinformationen der zweiten Trägerfrequenz zumindest Steuerkanalinformationen der zweiten Trägerfrequenz umfassen; und
ein Operationsmodul (42), das so konfiguriert ist, dass es eine Operation gemäß den Beschreibungsinformationen der zweiten Trägerfrequenz durchführt;
wobei die Steuerkanalinformation der zweiten Trägerfrequenz eines umfasst von:
einer Sendeperiode eines Steuerkanals, wobei, wenn ein Frequenzband der zweiten Trägerfrequenz höher ist als ein Frequenzband der ersten Trägerfrequenz, die Sendeperiode eines auf der zweiten Trägerfrequenz gesendeten Steuerkanals kürzer ist als eine Sendeperiode eines auf der ersten Trägerfrequenz gesendeten Steuerkanals;
in dem Steuerkanal enthaltene Steuerinformationen, wobei, wenn ein Frequenzband der zweiten Trägerfrequenz höher ist als ein Frequenzband der ersten Trägerfrequenz, die Anzahl der Bits, die Ressourcenzuordnungsinformationen in Steuerinformationen beschreiben, die in einem auf der zweiten Trägerfrequenz gesendeten Steuerkanal enthalten sind, kleiner ist als die Anzahl der Bits, die Ressourcenzuordnungsinformationen in Steuerinformationen beschreiben, die in einem auf der ersten Trägerfrequenz gesendeten Steuerkanal enthalten sind; und
Anzeigeinformation einer Ressource, die zum Senden des Steuerkanals verwendet wird, wobei, wenn ein Frequenzband der zweiten Trägerfrequenz höher ist als ein Frequenzband der ersten Trägerfrequenz, eine Bandbreite, die von einem auf der zweiten Trägerfrequenz gesendeten Steuerkanal belegt wird, größer ist als eine Bandbreite, die von einem auf der ersten Trägerfrequenz gesendeten Steuerkanal belegt wird.

## Revendications

1. Procédé de coopération de fréquences entre porteuses, comprenant :
déterminer des informations de description d'une deuxième fréquence porteuse (101) ; et
transmettre, par un premier nœud de communication, des informations de description de la deuxième fréquence porteuse à un deuxième nœud de communication par l'intermédiaire d'une première fréquence porteuse (102), et les informations de description de la deuxième fréquence porteuse comprenant au moins des informations de canal de commande de la deuxième fréquence porteuse ;
dans lequel les informations de canal de commande de la deuxième fréquence porteuse comprennent :
une période de transmission d'un canal de commande, dans laquelle lorsqu'une bande de fréquences de la deuxième fréquence porteuse est supérieure à une bande de fréquences de la première fréquence porteuse, la période de transmission d'un canal de commande transmis sur la seconde fréquence porteuse est plus courte qu'une période de transmission d'un canal de commande transmis sur la première fréquence porteuse ;
des informations de commande contenues dans le canal de commande, dans lequel lorsqu'une bande de fréquences de la seconde fréquence porteuse est supérieure à une bande de fréquences de la première fréquence porteuse, le nombre de bits décrivant des informations d'allocation de ressources dans des informations de commande contenues dans un canal de commande transmis sur la deuxième fréquence porteuse est inférieur au nombre de bits décrivant des informations d'allocation de ressources dans des informations de commande contenues dans un canal de commande transmis sur la première fréquence porteuse ; et
des informations d'indication d'une ressource utilisée pour transmettre le canal de commande, dans lequel, lorsqu'une bande de fréquences de la deuxième fréquence porteuse est supérieure à une bande de fréquences de la première fréquence porteuse, une largeur de bande occupée par un canal de commande transmis sur la deuxième fréquence porteuse est supérieure à une largeur de bande occupée par un canal de commande transmis sur la première fréquence porteuse.

2. Procédé selon la revendication 1, dans lequel les informations de description de la deuxième fréquence porteuse comprennent en outre des informations de faisceau de transmission de la deuxième fréquence porteuse, et
les informations de faisceau de transmission de la deuxième fréquence porteuse comprennent l'un de : un nombre de faisceaux de transmission, des informations d'ensemble de faisceaux de transmission et des informations d'indication de ressources de faisceaux de transmission.

3. Procédé selon la revendication 1, dans lequel les informations de description de la deuxième fréquence porteuse comprennent en outre des informations de pilote de la deuxième fréquence porteuse, et
les informations de pilote de la deuxième fréquence porteuse comprennent l'un des éléments suivants : un type de pilote, des informations d'indication des ressources temps-fréquence utilisées par différents types de pilotes, des modes de rétroaction correspondant à différents types de pilotes et des paramètres d'estimation de canal basés sur différents types de pilotes.

4. Procédé selon la revendication 1, dans lequel les informations de description de la deuxième fréquence porteuse comprennent en outre des informations de canal de données de la deuxième fréquence porteuse, et
les informations de canal de données de la deuxième fréquence porteuse comprennent l'une des informations suivantes :
des informations de séquence étendue utilisées lorsque le deuxième nœud de communication transmet des données et des informations d'indication d'une fréquence porteuse utilisées lorsque le deuxième nœud de communication transmet des données retransmises.

5. Procédé selon la revendication 1, dans lequel les informations de description de la deuxième fréquence porteuse comprennent en outre :
un temps de transmission t2 d'informations de l'accusé de réception, ACK, ou de l'accusé de réception négatif, NAK, générées par le deuxième nœud de communication pour une condition de décodage d'un paquet de données de liaison descendante transmis à un temps t1 sur la deuxième fréquence porteuse.

6. Procédé selon la revendication 1, dans lequel les informations de description de la deuxième fréquence porteuse comprennent en outre des informations de synchronisation HARQ (Hybrid Automatic Repeat Request) de la deuxième fréquence porteuse,
les informations de synchronisation HARQ de la deuxième fréquence porteuse comprenant :
un moment où le deuxième nœud de communication retourne des informations HARQ pour un paquet de données physiques transmis sur la deuxième fréquence porteuse ;
dans lequel, lorsque la bande de fréquences de la deuxième fréquence porteuse est supérieure à la bande de fréquences de la première fréquence porteuse, le moment où le deuxième nœud de communication retourne les informations HARQ pour les paquets de données physiques transmis sur la deuxième fréquence porteuse est antérieur à un moment de fin de transmission du paquet de données physiques.

7. Procédé selon la revendication 1, dans lequel les informations de description de la deuxième fréquence porteuse comprennent en outre des informations de temps de travail du deuxième nœud de communication sur la deuxième fréquence porteuse, et
les informations de temps de travail du deuxième nœud de communication sur la deuxième fréquence porteuse se réfèrent à une période de temps pendant laquelle le deuxième nœud de communication reçoit un canal de commande sur la deuxième fréquence porteuse.

8. Procédé de coopération de fréquences inter-porteuses, comprenant :
recevoir, par un deuxième nœud de communication, d'informations de description d'une deuxième fréquence porteuse, transmises par un premier nœud de communication via une première fréquence porteuse (201), et les informations de description de la deuxième fréquence porteuse comprenant au moins des informations de canal de commande de la deuxième fréquence porteuse ; et
exécuter, par le deuxième nœud de communication, d'une opération selon les informations de description de la deuxième fréquence porteuse (202) ;
dans lequel les Informations de canal de commande de la deuxième fréquence porteuse comprend l'un de :
une période de transmission d'un canal de commande, dans lequel lorsqu'une bande de fréquence de la deuxième fréquence porteuse est supérieure à une bande de fréquence de la première fréquence porteuse, la période de transmission d'un canal de commande transmis sur la deuxième fréquence porteuse est plus courte qu'une période de transmission d'un canal de commande transmis sur la première fréquence porteuse ;
des informations de commande contenues dans le canal de commande, dans lequel, lorsqu'une bande de fréquences de la deuxième fréquence porteuse est supérieure à une bande de fréquences de la première fréquence porteuse, le nombre de bits décrivant des informations d'allocation de ressources dans des informations de commande contenues dans un canal de commande transmis sur la deuxième fréquence porteuse est inférieur au nombre de bits décrivant des informations d'allocation de ressources dans des informations de commande contenues dans un canal de commande transmis sur la première fréquence porteuse ; et
des informations d'indication d'une ressource utilisée pour transmettre le canal de commande, dans lequel, lorsqu'une bande de fréquences de la deuxième fréquence porteuse est supérieure à une bande de fréquences de la première fréquence porteuse, une largeur de bande occupée par un canal de commande transmis sur la deuxième fréquence porteuse est supérieure à une largeur de bande occupée par un canal de commande transmis sur la première fréquence porteuse.

9. Procédé selon la revendication 8, dans lequel les informations de description de la deuxième fréquence porteuse comprennent en outre des informations de faisceau de transmission de la deuxième fréquence porteuse,
les informations de faisceau de transmission de la deuxième fréquence porteuse comprennent l'un de : un nombre de faisceaux de transmission, des informations d'ensemble de faisceaux de transmission et des informations d'indication de ressources de faisceaux de transmission ; et
les faisceaux de transmission comprennent un premier ensemble de faisceaux de transmission et un deuxième ensemble de faisceaux de transmission.

10. Procédé selon la revendication 8, dans lequel les informations de description de la deuxième fréquence porteuse comprennent en outre des informations de pilote de la deuxième fréquence porteuse,
les informations de pilote de la deuxième fréquence porteuse comprennent au moins l'un d'un type de pilote, d'informations d'indication de ressources temps-fréquence utilisées par différents types de pilotes, de modes de rétroaction correspondant à différents types de pilotes et de paramètres d'estimation de canal basés sur différents types de pilotes ;
le type de pilote comprend au moins un premier type de pilote et un deuxième type de pilote ; et
exécuter, par le deuxième nœud de communication, de l'opération selon les informations de description de la deuxième fréquence porteuse comprend :
déterminer, par le deuxième nœud de communication, que le nombre de ports correspondant au premier type de pilote est supérieur au nombre de ports correspondant au deuxième type de pilote selon les informations de description de la deuxième fréquence porteuse.

11. Procédé selon la revendication 8, dans lequel la réalisation, par le deuxième nœud de communication, de l'opération selon les informations de description de la deuxième fréquence porteuse comprend :
recevoir, par le deuxième nœud de communication, du canal de commande transmis sur la deuxième fréquence porteuse selon les informations de description de la deuxième fréquence porteuse.

12. Procédé selon la revendication 8, dans lequel les informations de description de la deuxième fréquence porteuse comprennent en outre des informations de canal de données de la deuxième fréquence porteuse,
les informations de canal de données de la deuxième fréquence porteuse comprennent l'une des informations suivantes : des informations de séquence étendue utilisées lorsque le deuxième nœud de communication transmet des données et des informations d'indication d'une fréquence porteuse utilisée lorsque le deuxième nœud de communication transmet des données retransmises ;
les informations de séquence étendue utilisées lorsque le deuxième nœud de communication transmet les données comprend l'un des éléments suivants :
un mode de génération pour une séquence à spectre étalé, une relation de mappage entre une séquence à spectre étalé et une ressource de transmission et un procédé de sélection pour une séquence à spectre étalé ; et
exécuter, par le deuxième nœud de communication, de l'opération selon les informations de description de la deuxième fréquence porteuse comprend :
transmettre, par le deuxième nœud de communication, des données sur la deuxième fréquence porteuse selon les Informations de séquence étendue dans un délai d'un mois par le deuxième nœud de communication, l'opération selon les informations de description de la deuxième fréquence porteuse dans les informations de description de la deuxième fréquence porteuse, dans lequel la fréquence porteuse utilisée lorsque le deuxième nœud de communication transmet les données retransmises est différente de la première fréquence porteuse et de la deuxième fréquence porteuse.

13. Procédé selon la revendication 8, dans lequel les informations de description de la deuxième fréquence porteuse comprennent en outre des informations de synchronisation HARQ (Hybrid Automatic Repeat Request) de la deuxième fréquence porteuse,
les informations de synchronisation HARQ de la deuxième fréquence porteuse comprenant :
un moment où le deuxième nœud de communication retourne des informations HARQ pour un paquet de données physiques transmis sur la deuxième fréquence porteuse ;
lorsque la bande de fréquences de la deuxième fréquence porteuse est supérieure à la bande de fréquences de la première fréquence porteuse, le moment où le deuxième nœud de communication retourne les informations HARQ pour le paquet de données physiques transmis sur la deuxième fréquence porteuse est antérieur à un moment de fin de transmission du paquet de données physiques ; et
exécuter, par le deuxième nœud de communication, de l'opération selon les informations de description de la deuxième fréquence porteuse comprend :
transmettre, par le deuxième nœud de communication, des informations HARQ pour le paquet de données physiques transmis sur la deuxième fréquence porteuse au moment conforme aux informations de description de la deuxième fréquence porteuse.

14. Procédé selon la revendication 8, dans lequel les informations de description de la deuxième fréquence porteuse comprennent en outre des informations de temps de travail du deuxième nœud de communication sur la deuxième fréquence porteuse,
les informations de temps de travail du deuxième nœud de communication sur la deuxième fréquence porteuse se rapportent à une période de temps pendant laquelle le deuxième nœud de communication reçoit un canal de commande sur la deuxième fréquence porteuse ; et
exécuter, par le deuxième nœud de communication, de l'opération selon les informations de description de la deuxième fréquence porteuse comprend :
recevoir, par le deuxième nœud de communication, du canal de commande sur la deuxième fréquence porteuse dans la période de temps selon les informations de description de la deuxième fréquence porteuse.

15. Dispositif de coopération de fréquences entre porteuses, comprenant :
un module de détermination (31), configuré pour déterminer des informations de description d'une deuxième fréquence porteuse ; et
un module de transmission (32), configuré pour transmettre les informations de description de la deuxième fréquence porteuse à un deuxième nœud de communication via une première fréquence porteuse, et les informations de description de la deuxième fréquence porteuse comprenant au moins des informations de canal de commande de la deuxième fréquence porteuse ;
dans lequel les informations de canal de commande de la deuxième fréquence porteuse comprend l'un de :
une période de transmission d'un canal de commande, dans laquelle lorsqu'une bande de fréquences de la deuxième fréquence porteuse est supérieure à une bande de fréquences de la première fréquence porteuse, la période de transmission d'un canal de commande transmis sur la deuxième fréquence porteuse est plus courte qu'une période de transmission d'un canal de commande transmis sur la première fréquence porteuse ;
des informations de commande contenues dans le canal de commande, dans lequel, lorsqu'une bande de fréquences de la deuxième fréquence porteuse est supérieure à une bande de fréquences de la première fréquence porteuse, le nombre de bits décrivant des informations d'allocation de ressources dans des informations de commande contenues dans un canal de commande transmis sur la deuxième fréquence porteuse est inférieur au nombre de bits décrivant des informations d'allocation de ressources dans des informations de commande contenues dans un canal de commande transmis sur la première fréquence porteuse ; et
des informations d'indication d'une ressource utilisée pour transmettre le canal de commande, dans lequel, lorsqu'une bande de fréquences de la deuxième fréquence porteuse est supérieure à une bande de fréquences de la première fréquence porteuse, une largeur de bande occupée par un canal de commande transmis sur la deuxième fréquence porteuse est supérieure à une largeur de bande occupée par un canal de commande transmis sur la première fréquence porteuse.

16. Dispositif de coopération de fréquences entre porteuses, agencé dans un deuxième nœud de communication et comprenant :
un module de réception (41), configuré pour recevoir des informations de description d'une deuxième fréquence porteuse, transmises par un premier nœud de communication via une première fréquence porteuse, et
les informations de description de la deuxième fréquence porteuse comprenant au moins des informations de canal de commande de la deuxième fréquence porteuse ; et
un module d'opération (42), configuré pour effectuer une opération selon les informations de description de la deuxième fréquence porteuse ;
dans lequel les informations de canal de commande de la deuxième fréquence porteuse comprend l'un de :
une période de transmission d'un canal de commande, dans laquelle lorsqu'une bande de fréquences de la deuxième fréquence porteuse est supérieure à une bande de fréquences de la première fréquence porteuse, la période de transmission d'un canal de commande transmis sur la deuxième fréquence porteuse est plus courte qu'une période de transmission d'un canal de commande transmis sur la première fréquence porteuse ;
des informations de commande contenues dans le canal de commande, dans lequel lorsqu'une bande de fréquences de la deuxième fréquence porteuse est supérieure à une bande de fréquences de la première fréquence porteuse, le nombre de bits décrivant des informations d'allocation de ressources dans des informations de commande contenues dans un canal de commande transmis sur la deuxième fréquence porteuse est inférieur au nombre de bits décrivant des informations d'allocation de ressources dans des informations de commande contenues dans un canal de commande transmis sur la première fréquence porteuse ; et
des informations d'indication d'une ressource utilisée pour transmettre le canal de commande, dans lequel, lorsqu'une bande de fréquences de la deuxième fréquence porteuse est supérieure à une bande de fréquences de la première fréquence porteuse, une largeur de bande occupée par un canal de commande transmis sur la deuxième fréquence porteuse est supérieure à une largeur de bande occupée par un canal de commande transmis sur la première fréquence porteuse.
